# EUROPÄISCHE PATENTSCHRIFT

(11) **EP 0 735 070 B1**
(45) Veröffentlichungstag und Bekanntmachung des Hinweises auf die Patenterteilung: **12.01.2000**
(21) Anmeldenummer: 96104783.4
(22) Anmeldetag: 26.03.1996
(51) Int. Cl.: C08G 59/40, C08L 63/00

(54) **Härtungsmittel für elastische Epoxidharz-Systeme**
Curing agents for elastic epoxy resin compositions
Agents de durcissement pour des compositions élastiques de résines époxydes

(30) Priorität: 01.04.1995 DE 19512316
(43) Veröffentlichungstag der Anmeldung: 02.10.1996
(73) Patentinhaber: Vianova Resins GmbH, 55252 Mainz-Kastel (DE)
(72) Erfinder: Marten, Manfred, 55126 Mainz (DE); Godau, Claus, 65399 Kiedrich (DE); Neumann, Uwe, Dr., 65307 Bad Schwalbach (DE)
(74) Vertreter: Zounek, Nikolai, Dipl.-Ing.

(56) Entgegenhaltungen:
- EP-A- 0 473 031
- EP-A- 0 559 033
- EP-A- 0 675 143
- DE-A- 4 344 487
- US-A- 3 609 121
- US-A- 4 316 003
- DIE ANGEWANDTE MAKROMOLEKULARE CHEMIE, Bd. 170, Juni 1989, BASEL, CH, Seiten 211-225, XP000572265 G.ROKICKI ET AL.:

## Beschreibung

Epoxidharze, insbesondere solche, die aus Bisphenol A und Epichlorhydrin hergestellt werden, sind bekannte Rohstoffe für die Herstellung von qualitativ hochwertigen Gießharzen und Beschichtungsmassen. Diese mit Polyaminen gehärteten aromatischen Epoxidharze besitzen neben guter Chemikalien- und Lösungsmittelbeständigkeit eine gute Haftfestigkeit auf vielen Untergründen. Lösungsmittelfrei verarbeitbaren, möglichst niedrigviskosen Bisphenol-A-Epoxidharzen kommt eine erhebliche Bedeutung zu, beispielsweise für den Schutz und die Sanierung von Betonbauwerken, als Betonzusatzstoffe (ECC-Bereich, ECC = epoxide cement concrete), für elastische Klebstoffsysteme in verschiedenen Anwendungsbereichen und für die Lackierung unterschiedlichster Substrate. Die Härtung der Epoxidharze kann bei Verwendung von Polyaminen bei Umgebungstemperatur erfolgen.

Häufig ist die Anwendbarkeit der Epoxidharz/Polyamin-Systeme jedoch begrenzt durch eine unzureichende Elastizität bzw. Flexibilität im vernetzten Zustand. Für eine dauerhafte Rißüberbrückung werden aber Beschichtungsstoffe gefordert, die aufgrund ihrer hohen Elastizität über dem Riß "arbeiten" und dabei große Temperaturwechselbelastungen durch eine hohe Dehnbarkeit auffangen können.

Außerdem werden auf dem Klebstoffsektor elastische Epoxidharzsysteme benötigt, die noch bei Temperaturen unter 0 °C eine ausreichende Elastizität aufweisen. Darüber hinaus wird von Lackierungen erwartet, daß sie eine starke Verformung des Untergrundes ohne Bruch und Riß überstehen.

Prinzipiell kann man zwar extern durch Weichmacherzusatz oder intern durch Verringerung der Vernetzungsdichte die Elastizität von Epoxidharzsystemen erhöhen. Externe Elastifizierungsmittel sind jedoch nicht reaktiv und werden nicht in das Duromer-Netzwerk eingebaut. Als externe Weichmacher können Teer, Phthalsäureester, hochsiedende Alkohole, Ketonharze, Vinylpolymere und andere mit Epoxidharzen und Aminhärtern nicht reagierende Produkte eingesetzt werden. Diese Art der Modifizierung ist allerdings nur auf spezifische Anwendungsgebiete beschränkt, da sie eine Reihe von Nachteilen aufweist. So führen diese Zusätze zu einer starken Störung der Duromerstruktur, sind in ihrem Weichmachungseffekt bei tiefen Temperaturen begrenzt und neigen bei Temperaturbeanspruchung und Alterung zum Ausschwitzen. Zur internen Erhöhung der Elastizität werden mit den Epoxidharzen oder Härtern reagierende Verbindungen, die in die Vernetzung mit einbezogen werden, zugesetzt. Im einzelnen wird die elastifizierende Wirkung durch Einbau von langkettigen aliphatischen oder stark verzweigten Zusätzen, z.B. in die Härtungskomponente, erreicht. In der Praxis läßt sich so die Elastizität der Epoxidharzsysteme in gewissem Umfang durch den Einsatz von bestimmten Härtungsmitteln steuern. So können die gebräuchlichen Polyamine wie z.B. Äthylendiamin, Diäthylentriamin, Triäthylentetramin durch Umsetzung mit längerkettigen mehrbasigen Säuren in Polyamidoamine umgewandelt werden. Diese schon lange in erheblichem Umfang gebräuchlichen Härtungsmittel liefern ein befriedigendes Eigenschaftsbild weicher Härter für Epoxidharze, erfüllen aber nicht die Forderungen für ein zäh-elastisches Epoxidharzsystem, wie es für viele Anwendungen nötig ist.

Darüber hinaus sollen diese Epoxidharz-Härtersysteme möglichst niedrigviskos sein, um eine leichte Verarbeitung zu ermöglichen. Da Lösungsmittel aus Umweltschutzgründen häufig nicht mehr verwendet werden können, sind unverdünnte oder gegebenenfalls wasserverdünnbare Systeme gefordert.

Die US 4,316,003 offenbart Epoxid-Amin-Addukte, die als Härtungsmittel für Epoxidharze, insbesondere in wasserverdünnbaren Systemen, geeignet sind durch Umsetzung von Epoxidharzen, bevorzugt gesättigten Epoxidharzen, mit primären Monoaminen zu einem Zwischenprodukt und anschließende Weiterreaktion dieser Vorstufe mit polyfunktionellen Aminen erhalten werden. Die verwendeten Monoamine sind solche der Formel

R - NH₂

in der bedeutet R ein Alkyl-, Aryl-, Alkaryl- oder Alkanolrest. Geeignet sind Alkylamine mit bis zu 20 Kohlenstoffatomen, bevorzugt von 4 bis 18 Kohlenstoffatomen. In der Beschreibung und den angegebenen Beispielen sind keine verzweigten Alkylamine angegeben bzw. entsprechende Hinweise zu entnehmen. Lediglich die cyclischen Amine Cyclohexylamin, Benzylamin und aromatische Amine werden erwähnt. Bevorzugt sind die aliphatischen Amine mit Ketten von 8 bis 18 Kohlenstoffatomen, die unter der Handelsbezeichnung "Armeen" erhältlich sind.

Die Härtungsmittel werden in zwei Schritten mit mindestens zwei verschiedenen Aminen hergestellt. Im ersten Schritt wird das überschüssige Polyepoxid mit dem primären Monoamin in Gegenwart von Lösungsmittel bei 20 bis 150 °C umgesetzt bis die Abnahme der Epoxidgruppen zum Stillstand kommt. Die Reaktionszeit liegt im allgemeinen zwischen 20 Minuten und 1,5 Stunden. Typisch ist eine Zeit von 15 bis 45 Minuten bei 90 bis 110 °C. Die Lösungsmittelmenge liegt bei 10 bis 50 % bezogen auf die Gesamtmischung. Im zweiten Schritt wird dann auf 25 bis 75 °C abgekühlt und das polyfunktionelle Amin hinzugegeben. Dabei reagiert das Epoxid mit dem überschüssigen Amin exotherm ab.

Es ist allgemein bekannt, daß Epoxidgruppen in Gegenwart von tertiären Stickstoffgruppen instabil sind und zu Polymerisation neigen. Dies ist insbesondere der Fall bei erhöhten Temperaturen und Aminen wie sie in der US 4,316,003 verwendet werden. Das Herstellungsverfahren solcher Epoxid-Amin-Addukte ist deshalb, insbesondere im technischen Maßstab, mit erheblichen Nachteilen behaftet. Gleichmäßige Molmassenverteilungen sind schwer einzuhalten und es kann leicht zu unkontrollierten Gelationen kommen. Nachteilig ist ebenfalls die Verwendung von Lösungsmitteln, die zur vollständigen Reaktion in Stufe 1 (Spalte 7, Zeile 13 und 14) erforderlich sind, insbesondere zur Herstellung lösungsmittelhaltiger zäh- bis hochelastischer Beschichtungsmassen. Die US 4,316,003 zielt auf wasserlösliche Systeme, die als elastische Systeme im Bereich rißüberbrückende Beschichtungen ungeeignet sind.

In der EP 0 387 418 werden Härtungsmittel für Epoxidharze beschrieben, die durch Umsetzung von Polyalkylenpolyaminen mit Di- und/oder Polyepoxid-Verbindungen zu einem Vorprodukt und Umsetzung dieses Vorproduktes mit primären oder sekundären Aminen erhalten werden. Diese Härtungsmittel finden insbesondere zur Herstellung wäßriger Epoxidharz-Härter-Emulsionen bzw. -Dispersionen Verwendung. Um eine ausreichende Wasserlöslichkeit der Epoxidharz-Emulsionen bzw. -Dispersionen zu erzielen, müssen einerseits genügend Polyäthergruppen, insbesondere Polyäthylenoxidgruppen in dem Härtungsmittel vorhanden sein, andererseits wird aber deren Anteil so gering wie möglich gehalten, damit das gehärtete Epoxid-System zufriedenstellende lacktechnische Eigenschaften und Chemikalienbeständigkeiten erreicht. In den Beispielen 9 bis 11 (Acrylnitril-frei) liegt der Polyätheraminanteil unter 25 % (unter 12 % auf Gesamtsystem), in den Beispielen 22 I und II unter 20 % (auf Gesamtsystem), jeweils bezogen auf Feststoffanteil. Für viele Anwendungen, insbesondere für elastische Beschichtungen und Überzüge, muß ein wesentlich höherer Anteil von z. B. 30 bis zu 40 % elastifizierende Polyäther-komponente bezogen auf das Gesamtsystem eingebaut werden. Das hat zur Folge, daß die Beschichtungen in der Anfangsphase der Härtung (z. B. bis 48 h) noch weich sind und eine klebrige Oberfläche aufweisen. In der Praxis ist dies unerwünscht, weil sich dadurch längere Wartezeiten für die nachfolgende Bearbeitung oder Benutzung ergeben. Bei solchen hochelastischen Systemen verbleibt auch häufig noch eine unerwünschte Restklebrigkeit.

Die Umsetzung von Cyclocarbonaten mit Aminen ist bekannt. So wird beispielsweise in der US 4,122,069 die Herstellung von Polyoxyalkylendicarbonaten aus Polyoxyalkylenpolyaminen und Alkylencarbonat und deren Verwendung als Additiv bei der Epoxidharz/Polyamin-Härtung beschrieben.

Die US 4,484,994 offenbart selbstvernetzende Polymere die Hydroxyalkylcarbamat und tertiäre Amingruppen im Molekül enthalten. Die Polymere sind Reaktionsprodukte aus Epoxidharz und Aminen mit sekundären Aminogruppen und Hydroxyalkylcarbamatgruppen, erhalten aus Polyaminen und cyclischen Carbonaten.

Nach der EP 0 535 794 werden Epoxidharze mit einer Mischung aus diprimären Aminen und Carbamaten gehärtet. Die Carbamate sind Reaktionsprodukte diprimärer Amine mit cyclischen Carbonaten.

Rokicki, Lazinski, Die Angewandte Makromolekulare Chemie 170 (1989) 211 - 225, beschreiben die Verwendung von Reaktionsprodukten aus Triäthylentetramin und cyclischen Carbonaten als Härtungsmittel für Epoxidharze. Auch die Herstellung der eingesetzten cyclischen Carbonate wird angegeben. Eine ausführliche Darstellung zur Synthese von Cyclocarbonaten aus Epoxiden und Kohlendioxid findet sich in den Europäischen Patentanmeldungen EP 0 212 409 und EP 0 229 622. Nicht bekannt geworden ist aber bisher die direkte Herstellung von Cyclocarbonaten aus Epoxiden, die gleichzeitig nichtaromatisch gebundenen tertiären basischen Stickstoff im Molekül enthalten. Wie bereits oben beschrieben, sind Epoxide in Gegenwart von tertiären basischem Stickstoff instabil. Bei weiteren insbesondere temperaturbelastenden Umsetzungen an der Epoxidgruppe kann es leicht zu unerwünschten Nebenreaktionen kommen (Eigenpolymerisation).

Aufgabe der Erfindung war es daher, Härter sowie diese enthaltende härtbare Mischungen auf Basis von Epoxidharzen bereitzustellen, welche die Nachteile der bekannten Systeme nicht oder zumindest nur in vermindertem Umfange aufweisen.

Es wurde nun gefunden, daß die im folgenden beschriebenen, erfindungsgemäßen Härtungsmittel für Epoxidharze überraschenderweise diese Nachteile nicht zeigen. Härtbare Massen aus diesen Härtern und epoxygruppenhaltigen Verbindungen (Epoxidharzen) liefern vielmehr gut haftende Überzüge oder Klebstoffe, Flächengebilde, Dichtungsmassen, Formteile und dergleichen mit hoher Elastizität und guten rißüberbrückenden Eigenschaften auch bei Temperaturen unter 0 °C. Die erfindungsgemäßen Härtungsmittel lassen sich dabei auf einfache Weise lösungsmittelfrei herstellen.

In einer Ausführungsform der Erfindung werden Hydroxyalkylurethan-modifizierte Härtungsmittel über eine direkte Kohlendioxidanlagerung an tert. basischen Stickstoff tragende Epoxide und deren weitere Umsetzung mit Polyaminen erhalten. Aus den auf diese Weise gewonnenen Härtungsmitteln lassen sich Beschichtungen herstellen, die in kurzer Zeit trocknen und sich durch Klebfreiheit auszeichnen.

Gegenstand der Erfindung sind Härtungsmittel für Epoxidharze bestehend aus Umsetzungsprodukten von
(A) Verbindungen, die mindestens zwei 1,2-Epoxidgruppen enthalten, die Umsetzungsprodukte sind aus
   (A1) Verbindungen mit mindestens zwei 1,2-Epoxidgruppen pro Molekül
   (A2) gegebenenfalls in Abmischung mit Mono-Epoxiden und
   (A3) einem oder mehreren Aminen ausgewählt aus (A 31) Aminen der Formel I 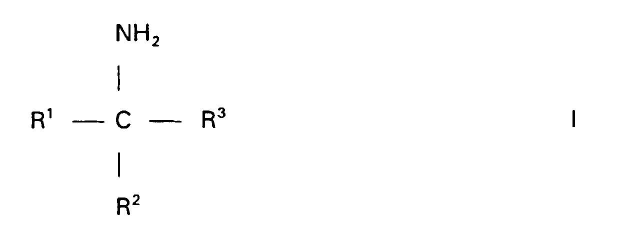 in der bedeuten
      - R¹: verzweigter oder unverzweigter aliphatischer, cycloaliphatischer, araliphatischer oder aromatischer, gegebenenfalls durch Hydroxy-, Alkoxyoder Halogen-Gruppen substituierter Kohlenwasserstoffrest mit 1 bis 30 Kohlenstoffatomen,
      - R² und R³: jeweils unabhängig voneinander Wasserstoff oder R¹ und für den Fall, daß R² und R³ Wasserstoff sind, der verbleibende Rest R¹ einer der folgenden Substituenten ist 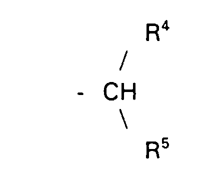 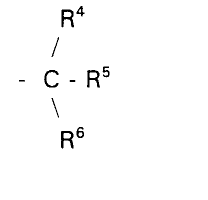 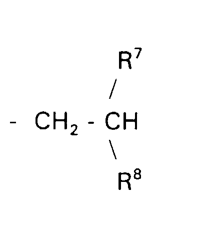 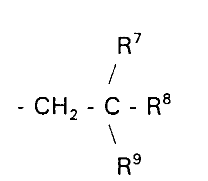
      wo die Reste
      - R⁴ bis R⁹: jeweils unabhängig voneinander die Bedeutung verzweigter oder unverzweigter aliphatischer, cycloaliphatischer, araliphatischer oder aromatischer, gegebenenfalls durch Hydroxy-, Alkoxy- oder Halogen-Gruppen substituierter Kohlenwasserstoffrest mit 1 bis 30 Kohlenstoffatomen haben, und
   (A32) Aminen der Formel II 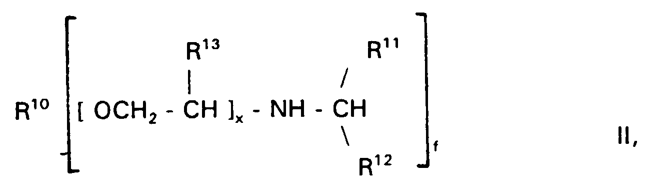 worin
      - R¹⁰: 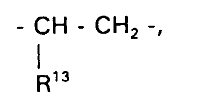 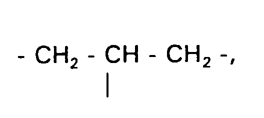 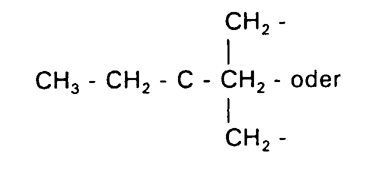 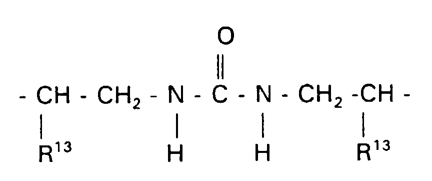 bedeutet,
      - R¹¹ und R¹²: jeweils unabhängig voneinander Wasserstoff, ein gesättigtes oder ungesättigtes geradkettiges, verzweigtes oder cyclisches (gegebenenfalls mit Heteroatomen im Ring) Alkyl mit bis zu 15 Kohlenstoffatomen, oder zusammen einen cyclischen Alkylenrest mit bis zu 8 Kohlenstoffatomen, der gegebenenfalls mit Alkylgruppen mit 1 bis 3 Kohlenstoffatomen ein-, zwei- oder dreifach substituiert ist,
      - R¹³: Wasserstoff oder Methyl,
      - x: eine ganze Zahl von 1 bis 100, und
      - f: 2 oder 3 bedeuten,
   (A 33) Aminen der Formel III 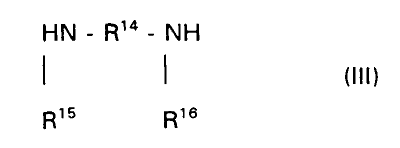 in der bedeuten
      - R¹⁴: ein Alkylen-, Cycloalkylen- oder Aralkylenrest, der gegebenenfalls durch Hydroxy-, Äther- oder Halogengruppen substituiert ist,
      - R¹⁵ und R¹⁶: Alkyl-, unabhängig voneinander ein Cycloalkyl- oder Aralkylrest, der gegebenenfalls durch Hydroxy-, Äther- oder Halogen-Gruppen substituiert ist, wobei beide Reste, gegebenenfalls auch durch Heteroatome, verbunden sein können, mit der Maßgabe, daß mindestens einer der Substituenten R¹⁴, R¹⁵ oder R¹⁶ in α- und/oder β-Stellung zu jedem N-Atom eine Verzweigung aufweist, d. h. mindestens eine Methylgruppe trägt und/oder daß der Stickstoff als Ringatom gebunden ist, und/oder
(B) Cyclocarbonaten, die Umsetzungsprodukte sind aus den Verbindungen (A) und (B1) Kohlendioxid und/oder
(C) Cyclocarbonaten, die Umsetzungsprodukte sind aus
   (C1) Verbindungen mit mindestens zwei 1,2-Epoxidgruppen pro Molekül, erhalten aus
      (C11) Verbindungen mit mindestens zwei 1,2-Epoxidgruppen pro Molekül
      (C12) gegebenenfalls Monoepoxiden und
      (C13) Polyoxyalkylenaminen und
   (C2) Kohlendioxid
   und
(D) gegebenenfalls 1,2-Epoxidverbindungen, die nicht gleich (A1), (A2), (C11), (C12), sind und/oder nicht umgesetzte Anteile der Verbindungen (A1), (A2), (C11) und (C12) sind aus der Herstellung der Verbindungen (A) und (C1)
   und
(E) Polyaminen ausgewählt aus Polyalkylenpolyaminen, Diäthylentriamin und Triäthylentetramin, Tetraäthylenpentamin, Pentaäthylenhexamin, 2,2,4- und/oder 2,4,4-Trimethylhexamethylendiamin, Bis-(3-aminopropyl)-methylamin, 1,4-Bis(3-aminopropyl)-piperazin, N,N-bis(3-aminopropyl)äthylendiamin, 2-Methylpentandiamin (^{®}Dytek A), Oxyalkylenpolyamine wie Polyoxypropylendi- und triamine und 1,13-Diamino-4,7,10-trioxatridecan, Isophorondiamin (3,5,5-Trimethyl-3-aminomethylcyclohexylamin), 4,4'-Diaminodicyclohexylmethan, 3,3'-Dimethyl-4,4'-diamino-dicyclohexylmethan, N-Cyclohexyl-1,3-propandiamin, 1,2-Diaminocyclohexan, 1,4-Diamino-3,6-diäthylcyclohexan, 1,2-Diamino-4-äthylcyclohexan, 1-Cyclohexyl-3,4-diaminocyclohexan, 2,2-Bis-(4-aminocyclohexyl)-propan, 1,3- und 1,4-Bis(aminomethyl)-cyclohexan, Piperazin, N-Aminoäthylpiperazin, TCD-Diamin (3(4), 8(9)-Bis(aminomethyl)-tricyclo[5.2.1.0^{2,6}]decan), m- und p-Xylylendiamin, Phenylendiaminen, 4,4'-Oxydianilin und 4,4'-Diaminodiphenylmethan.
   und
(F) gegebenenfalls weiteren Zusätzen.

Als Komponenten (A1, C11 und D) kommen eine Vielzahl der hierfür bekannten Verbindungen in Betracht, die im Mittel mehr als eine Epoxidgruppe, vorzugsweise zwei Epoxidgruppen, pro Molekül enthalten. Es können jedoch auch Mischungen von Polyepoxiden mit Monoepoxiden (A2, C12, D) eingesetzt werden. Diese Epoxidverbindungen (Epoxidharze) können dabei sowohl gesättigt als auch ungesättigt sowie aliphatisch, cycloaliphatisch, aromatisch oder heterocyclisch sein und auch Hydroxylgruppen aufweisen. Sie können weiterhin solche Substituenten enthalten, die unter den Mischungs- oder Reaktionsbedingungen keine störenden Nebenreaktionen verursachen, beispielsweise Alkyl- oder Arylsubstituenten, Äthergruppierungen und ähnliche.

Vorzugsweise handelt es sich dabei um solche Glycidyläther, die sich von mehrwertigen Phenolen, insbesondere Bisphenolen sowie Novolaken ableiten und deren "Epoxidäquivalentgewichte" (molare Masse, dividiert durch die Anzahl der Epoxidverbindungen pro Molekül) zwischen 100 und 500, insbesondere jedoch zwischen 150 und 250 g/mol, liegen.

Als mehrwertige Phenole sind beispielsweise zu nennen: Resorcin, Hydrochinon, 2,2-Bis-(4-hydroxyphenyl)-propan (Bisphenol A), Isomerengemische des Dihydroxydiphenylmethans(Bisphenol F),4,4'-Dihydroxydiphenylcyclohexan, 4,4'-Dihydroxy-3,3'-dimethyldiphenylpropan, 4,4'-Dihydroxydiphenyl, 4,4'-Dihydroxybenzophenon, Bis-(4-hydroxyphenyl)-1,1-äthan, Bis-(4-hydroxyphenyl)-1,1-isobutan, Bis-(4-hydroxy-tert.-butylphenyl)-2,2-propan, Bis-(2-hydroxynaphthyl)-methan,1,5-Dihydroxynaphthalin,Tris-(4-hydroxyphenyl)-methan, Bis-(4-hydroxyphenyl)-äther, Bis-(4-hydroxyphenyl)-sulfon u. a. sowie die Chlorierungs- und Bromierungsprodukte der vorstehend genannten Verbindungen, wie beispielsweise Tetrabrombisphenol A. Ganz besonders bevorzugt werden flüssige Diglycidyläther auf Basis von Bisphenol A und Bisphenol F mit einem Epoxidäquivalentgewicht von 180 bis 190 g/mol.

Es können auch Polyglycidyläther von Polyalkoholen verwendet werden, wie z. B.Äthandiol-1,2-diglycidyläther,Propandiol-1,2-diglycidyläther,Propandiol-1,3-diglycidyläther, Butandioldiglycidyläther, Pentandioldiglycidyläther (auch Neopentylglykoldiglycidyläther), Hexandioldiglycidyläther, Diäthylenglykoldiglycidyläther, Dipropylenglykoldiglycidyläther, höhere Polyoxyalkylenglykoldiglycidyläther, wie z. B. höhere Polyoxyäthylenglykoldiglycidyläther und Polyoxypropylenglykoldiglycidyläther,Mischpolyoxyäthylen-propylenglykoldiglycidyläther, Polyoxytetramethylenglykoldiglycidyläther, Polyglycidyläther des Glycerins, des 1,2,6-Hexantriols, Trimethylolpropans, Trimethyloläthans, Pentaerythrits, Sorbits, Polyglycidyläther von oxalkylierten Polyolen (wie z. B. des Glycerins, Trimethylolpropans, Pentaerythrits), Diglycidyläther des Cyclohexandimethanols, Bis-(4-hydroxycyclohexyl)methans und 2,2-Bis-(4-hydroxycyclohexyl)propans, Polyglycidyläther des Rizinusöls, Triglycidyltris(2-hydroxy-äthyl)-isocyanurat. Ganz besonders bevorzugt werden Polyoxypropylenglykoldiglycidyläther mit einem Epoxidäquivalentgewicht von 150 bis 800, insbesondere von 300 bis 400 g/mol, eingesetzt.

In besonderen Fällen können zusätzlich zu den Polyglycidyläthern geringe Mengen (Komponenten A2, C12 und D) reaktiver Verdünner (Monoepoxide) in Mengen bis zu 30 %, vorzugsweise 10 bis 20 %, bezogen auf die Masse der Polyglycidyläther mitverwendet werden. Beispiele für geeignete Verbindungen sind Methylglycidyläther, Butylglycidyläther, Allylglycidyläther, Äthylhexylglycidyläther, langkettige aliphatische Glycidyläther, wie Cetylglycidyläther und Stearylglycidyläther, Monoglycidyläther eines höheren isomeren Alkoholgemisches, Glycidyläther einer Mischung von C₁₂- bis C₁₃-Alkoholen, Phenylglycidyläther, Kresylglycidyläther, p-t-Butylphenylglycidyläther, p-Oc-tylphenylglycidyläther, p-Phenyl-phenylglycidyläther, Glycidyläther eines oxalkylierten Laurylalkohols sowie Monoepoxide wie epoxidierte einfach ungesättigte Kohlenwasserstoffe (Butylen-, Cyclohexen-, Styroloxid) und halogenhaltige Epoxide, wie Epichlorhydrin.

Weiterhin kommen in Frage als Komponenten Al, C11 und D Poly-(N-glycidyl)-Verbindungen, die erhältlich sind durch Dehydrohalogenierung der Reaktionsprodukte von Epichlorhydrin und Aminen wie Anilin, n-Butylamin, Bis-(4--aminophenyl)methan, m-Xylylendiamin oder Bis-(4-methylaminophenyl)methan. Zu den Poly-(N-glycidyl)-Verbindungen zählen aber auch Triglycidylisocyanurat, Triglycidylurazol sowie deren Oligomere, N,N'-Diglycidylderivate von Cycloalkylenharnstoffen und Diglycidylderivate von Hydantoinen u. a.

Weiterhin können auch Polyglycidylester von Polycarbonsäuren eingesetzt werden, die man durch die Umsetzung von Epichlorhydrin oder ähnlichen Epoxyverbindungen mit einer aliphatischen, cycloaliphatischen oder aromatischen Polycarbonsäure, wie Oxalsäure, Bernsteinsäure, Adipinsäure, Glutarsäure, Phthalsäure, Terephthalsäure, Tetrahydrophthalsäure, Hexahydrophthalsäure, 2,6-Naphthalindicarbonsäure und höhere Dicarbonsäurediglycidylester, wie z. B. dimerisierte bzw. trimerisierte Linolensäure, erhält. Beispiele sind Adipinsäurediglycidylester, Phthalsäurediglycidylester und Hexahydrophthalsäurediglycidylester. Weiterhin seien genannt Glycidylester ungesättigter Carbonsäuren und epoxidierte Ester von ungesättigten Alkoholen bzw. ungesättigten Carbonsäuren.

Eine ausführliche Aufzählung der geeigneten Epoxidverbindungen findet sich in dem Handbuch "Epoxidverbindungen und Epoxidharze" von A. M. Paquin, Springer Verlag, Berlin 1958, Kapitel IV, und in Lee Neville "Handbook of Epoxy Resins", 1967, Chapter 2.

Es können auch Mischungen von mehreren Epoxidharzen verwendet werden.

Als Amine (A31) zur Herstellung der erfindungsgemäßen 1,2-Epoxidverbindungen eignen sich t-Alkylamine mit 4 bis 22 Kohlenstoffatomen und bevorzugt solche der Formel (IV) 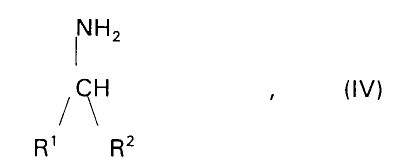 in der R¹ und R² die Bedeutung von R¹ in Anspruch 1 haben.

Bevorzugt werden eingesetzt beispielsweise t-Butylamin (2-Methyl-2-aminopropan), 2-Methyl-2-butylamin, t-Alkylamine der Rohm und Haas Company wie Primene^{®} TOA (t-Octylamin = 1,1,3,3-Tetramethylbutylamin), Primene^{®} 81 R (t-Alkylamine C 12 - C 14), Primene^{®} JM-T (t-Alkylamine C 16 - C 22), 2-Amino-2-methyl-1-propanol, 2-Amino-2-äthyl-1,3-propandiol, Tris(hydroxymethyl)aminomethan, Isopropylamin (2-Propanamin), sek. Butylamin (2-Aminobutan), 2-Amino-1-butanol, 3-Methyl-2-butylamin, 2-Pentylamin, 3-Pentylamin, 4-Methyl-2-pentylamin, 2-Heptylamin, 3-Heptylamin, 1-Methyl-heptylamin, 2-Methyl-cyclohexylamin, 4-t-Butylcyclohexylamin, 3-Amino-2,4-dimethylpentan, 6-Methyl-2-aminoheptan, 1-Phenyl-äthylamin, 1-Methyl-3-phenylpropylamin, besonders bevorzugt ist 2-Aminobutan.

Weiterhin sind geeignet: Isobutylamin (2-Methyl-1-propanamin), 2-Methylbutylamin (1-Amino-2-methyl-butan), Isoamylamin (Isopentylamin = 1-Amino-3-methyl-butan), Furfurylamin, Benzylamin, 4-Methoxy-benzylamin, 2-Äthylhexylamin, Isononylamin (Gemisch isomerer Nonylamine, das zu ca. 90 % aus 3,5,5-Trimethylhexylamin besteht) u. a., besonders bevorzugt ist 2-Äthylhexylamin.

Als sekundäre Amine (A32) werden vorzugsweise sekundäre Polyätherdiamine eingesetzt, besonders bevorzugt sind die disekundären Amine. Entsprechende Produkte werden von der Condea Chemie GmbH unter der Bezeichnung ^{®}Novamin vertrieben. Geeignet sind u. a. die sekundären Polyätheramine ^{®}Novamin N 10 (mittlere Molmasse in g/mol 390), N 20 (560), N 40 (2150) und N 50 (4150), besonders bevorzugt sind die sekundären Polyätherdiamine ^{®}Novamin N 20 und ^{®}Novamin N 40.

Als Amine (A33) sind Verbindungen der Formel (III) geeignet, beispielsweise werden eingesetzt N,N'-Diisopropyläthylendiamin, N,N'-Di-tert-butyläthylendiamin, N,N'-Diisopropyl-1,3-propandiamin, 1,3-Bis(tris (hydroxymethyl)methylamino)propan, Piperazin, 2-Methylpiperazin, 2,5-Dimethyl-piperazin, 2,6-Dimethylpiperazin, Homopiperazin, 4,4'-Trimethylendipiperidin. Weiter geeignet sind Amine, die Umsetzungsprodukte sind von primären Diaminen, die in α- und/oder β-Stellung zu jedem N-Atom eine Verzweigung aufweisen, d. h. mindestens eine Methylgruppe tragen, mit Monoepoxiden wie den beschriebenen Monoglycidyläthern (A2, C2, D). Dabei wird pro primäre Aminogruppe 1 Mol Monoepoxid eingesetzt. Bei diesen Aminen bedeuten in Formel (III) die Reste R¹⁵ und R¹⁶ 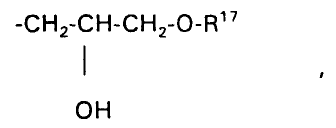 wobei R¹⁷ ein gegebenenfalls durch Hydroxy-, Äther- oder Halogengruppen substituierter Alkyl-, Cycloalkyl-, Aralkyl- oder Arylrest ist. Als geeignete Diamine seien beispielsweise genannt Neopentandiamin (2,2-Dimethyl-1,3-propandiamin), 1,2-Diamino-2-methylpropan, Diaminocyclohexane wie 1,2-Diaminocyclohexan und 1,4-Diaminocyclohexan, Xylylendiamine wie m-Xylylendiamin, 1,3-Bis(aminomethyl)cyclohexan, 1-Amino-2-aminomethyl-3,3,5(3,5,5)-trimethyl-cyclopentan, Triacetondiamin (4-Amino-2,2,6,6-tetramethylpiperidin), 1,8-Diamino-p-menthan, Isophorondiamin (3-Aminomethyl3,5,5-trimethylcyclohexylamin), 4,4'-Diaminodicyclohexylmethan, 3,3'-Dimethyl-4,4'-diaminodicyclohexylmethan sowie die Isomerenmischung von "TCD-Diamin" (3(4), 8(9)-Bis-(aminomethyl)-tricyclo[5.2.1.0^{2.6}]decan). Es können auch Mischungen der Amine (A31), (A32) und (A33) benutzt werden.

Die erfindungsgemäßen Epoxidverbindungen (A) werden in der Weise hergestellt, daß die Epoxide (A1) und gegebenenfalls (A2) mit den Aminen (A3) unter Rühren und im allgemeinen unter Erwärmen solange umgesetzt werden, bis das theoretisch berechnete Epoxidäquivalentgewicht erreicht ist, d. h. bis alle aktiven Wasserstoffatome des Amins mit den im Überschuß vorhandenen Epoxidgruppen reagiert haben. Die Reaktionstemperaturen werden dabei im allgemeinen bei 25 bis 200 °C, vorzugsweise bei 50 bis 150 °C, insbesondere bei 60 bis 130 °C gehalten. Je nach Temperatur und eingesetzten Epoxiden und Aminen liegen die Reaktionszeiten allgemein zwischen wenigen Minuten und mehreren Stunden.

In den meisten Fällen sind keine zusätzlichen Katalysatoren zur quantitativen Umsetzung der Amine mit den Epoxiden notwendig. Vorteilhaft ist es, insbesondere bei niedrig siedenden Aminen, mit einem Überdruck z. B. bis 5 bar zu arbeiten.

Bei der Herstellung der erfindungsgemäßen Epoxidverbindungen (A) können auch verschiedene Epoxide (A1) und gegebenenfalls (A2) als Mischung eingesetzt und direkt mit den Aminen (A3) umgesetzt werden. Es kann aber auch ein gezielter, stufenweiser Aufbau mit verschiedenen Epoxiden nacheinander erfolgen der Art, daß zunächst ein Epoxid I (A1) und gegebenenfalls (A2) mit einem Überschuß der Amine, z. B. 2 aktive Aminwasserstoffatome pro Epoxidgruppe, und nach vollständiger Umsetzung der Epoxidgruppen des Epoxids I ein weiteres Epoxid II (A1) und gegebenenfalls (A2) im Überschuß mit den noch verfügbaren aktiven Aminwasserstoffatomen zur Reaktion gebracht wird.

Auf entsprechende Weise können auch verschiedene Amine (A3) sowohl als Mischung als auch in einem stufenweisen Aufbau eingesetzt werden. In den jeweiligen Zwischenstufen mit Aminüberschuß ist es möglich, freies Restamin destillativ gegebenenfalls unter Vakuum zu entfernen. Es können auch beliebige Mischungen der erfindungsgemäßen Epoxide hergestellt werden, z. B. um bestimmte Verarbeitungsviskositäten und Eigenschaften der gehärteten Systeme zu erzielen.

Zur Synthese der Cyclocarbonate (B) und (C) sei auf die bereits erwähnte Literatur verwiesen. In den Patentschriften EP 0 212 409 und EP 0 229 622 sind geeignete Herstellungsverfahren und wirksame Katalysatoren beschrieben. Die erfindungsgemäßen Komponenten (B) und (C) werden bevorzugt durch drucklose Arbeitsweise ohne Lösungsmittel gewonnen. Überraschenderweise können dabei Temperaturen angewendet werden, wie sie von der Carbonatisierung herkömmlicher Epoxide bekannt sind, ohne daß es zu einer Eigenpolymerisation der basischen Stickstoffgruppen enthaltenden Epoxidverbindungen kommt. Dabei kann die Reaktionszeit in weiten Grenzen schwanken.

Im allgemeinen wird die Umsetzung so geführt, daß die Epoxidgruppen praktisch vollkommen mit Kohlendioxid abreagieren. Die Reaktion kann aber auch an jedem gewünschten Punkt abgebrochen werden, so daß Verbindungen entstehen, die neben Carbonatgruppen noch intakte Epoxidgruppen aufweisen.

Letzteres hat den Vorteil, daß der Urethangruppengehalt über die anschließende Umsetzung mit den Polyaminen (E) je nach anwendungstechnisch gewünschten Eigenschaften gesteuert werden kann. Im allgemeinen werden 10 bis 95, vorzugsweise 30 bis 90 % der Epoxidgruppen in das Cyclocarbonat überführt.

Als Polyoxyalkylenamine (C13) sind geeignet beispielsweise Polyoxyalkylendiamine und Polyoxyalkylenmonoamine. Geeignete Polyoxyalkylendiamine sind zum Beispiel Verbindungen der Formel 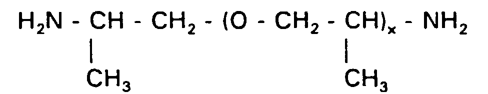 wie ®Jeffamine D 230 (durchschnittliche Molmasse M = 230 g/mol), ®Jeffamine D 400 (M = 400 g/mol), ®Jeffamine D 2000 (M = 2000 g/mol) u. a. von Huntsman Corporation sowie Verbindungen der Formel 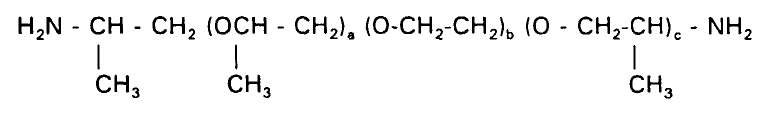 wie ®Jeffamine ED 600 (M = 600 g/mol) ( a + c = 2,5; ; b = 8,5); ®Jeffamine ED 900 (M = 900 g/mol) ( a + c = 2,5; ; b = 15,5); ®Jeffamine ED 2001 (M = 2000 g/mol) ( a + c = 2,5; ; b = 40,5), u. a. ebenfalls von Huntsman Corporation.

Die Polyalkylenmonoamine, die sich besonders brauchbar zur Bildung der Epoxide (C1) erwiesen haben, sind Verbindungen der Formel 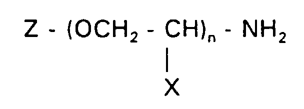 wobei X Wasserstoff, ein Methyl- oder Äthylrest, Z ein Kohlenwasserstoffrest mit 1 bis 5 Kohlenstoffatomen und n ein Mittelwert ist, der zwischen 2 und 50 liegt.

Bevorzugt werden Polyoxyalkylenmonoamine der Formel

Z - (O - CH₂ - CH₂)_{y} - [O - CH₂ - CH(CH₃)]ₓ - NH₂

eingesetzt, in der Z ein Kohlenwasserstoffrest mit 1 bis 5 Kohlenstoffatomen ist, insbesondere ein Methylrest und unabhängig voneinander y 0 bis 10 und x 1 bis 41 und in einer weiteren Ausführungsform y 1 bis 41 und x 1 bis 12 bedeuten.

Einige ausgewählte der vorstehend beschriebenen Monoamin-Blockpolymere mit Oxyäthylen- und Oxypropylengruppen werden z. B. von der Firma Huntsman Corporation unter der Handelsbezeichnung ®Jeffamine M-Serie vertrieben. Besonders erwähnt seien hier ®Jeffamine-Typen M 600, M 1000, M 2005 und M 2070.

Die Epoxidverbindungen (C1) werden in der Weise hergestellt, daß die Epoxide (C11) und gegebenenfalls (C12) mit den Polyalkylenaminen (C13) unter Rühren und im allgemeinen unter Erwärmen solange umgesetzt werden, bis das theoretisch berechnete Epoxidäquivalentgewicht erreicht ist, d. h. bis alle aktiven Wasserstoffatome des Polyoxyalkylenamins mit den im Überschuß vorhandenen Epoxidgruppen reagiert haben. Die Reaktionstemperaturen werden dabei im allgemeinen bei 25 bis 200 °C gehalten, vorzugsweise bei 50 bis 150 °C, insbesondere bei 80 bis 130 °C. Je nach Temperatur und eingesetzten Epoxiden und Aminen liegen die Reaktionszeiten allgemein zwischen wenigen Minuten und mehreren Stunden. In den meisten Fällen sind keine zusätzlichen Katalysatoren zur quantitativen Umsetzung der Amine mit den Epoxiden notwendig.

Bei der Herstellung der Epoxidverbindungen (C1) können auch verschiedene Epoxide (C11) und gegebenenfalls (C12) als Mischung eingesetzt und direkt mit den Polyoxyalkylenaminen (C13) umgesetzt werden.

Es kann aber auch ein gezielter, stufenweiser Aufbau mit verschiedenen Epoxiden nacheinander erfolgen der Art, daß zunächst ein Epoxid I (C11) mit einem Überschuß der Polyoxyalkylenamine, z. B. 2 aktive Aminwasserstoffatome pro Epoxidgruppe, und nach vollständiger Umsetzung der Epoxidgruppen des Epoxids ein weiteres Epoxid II (C11) und gegebenenfalls (C12) im Überschuß mit den noch verfügbaren aktiven Aminwasserstoffatomen zur Reaktion gebracht wird.

Bevorzugt werden als Aminkomponente (C13) Polyoxyalkylenmonoamine verwendet, wie z.B. Polyoxyäthylen- und Polyoxypropylen-monoamine. Beispiele sind Amine der Jeffamine-M-Serie und niedermolekulare Amine wie Methoxyäthylamin, Methoxyäthoxyäthylamin, höhere Oligomere sowie deren Homologe (Oxypropylenderivate).

Die Verbindungen (C) werden bevorzugt hergestellt durch Umsetzung von Verbindungen (C11), ausgewählt aus der Gruppe der Diglycidyläther von Bisphenol-A und Bisphenol-F, mit Polyoxyalkylenmonoaminen (C13) mit Molmassen von 130 bis 5000 g/mol und Kohlendioxid (C2).

Die Epoxidverbindungen (D) sind wie die Verbindungen gemäß (A1, C11) ausgewählt aus der Gruppe der Polyepoxide mit mindestens zwei Epoxidgruppen pro Molekül. Gegebenenfalls können sie auch in Mischung mit den Mono-epoxiden (A2, C12) verwendet werden. Sie sind im allgemeinen verschieden von den als (Al, C11) eingesetzten Verbindungen. Unter die Verbindungen (D) zählen jedoch auch nicht umgesetzte Reste der Epoxidverbindungen (Al, C11) und gegebenenfalls (A2, C12) aus der Herstellung der Epoxidharze (A) und (C1).

Als Polyamine (E) seien genannt: aliphatische Amine, wie die Polyalkylenpolyamine, Diäthylentriamin und Triäthylentetramin, Tetraäthylenpentamin, Pentaäthylenhexamin, 2,2,4- und/oder 2,4,4-Trimethylhexamethylendiamin, Bis-(3-aminopropyl)-methylamin,1,4-Bis(3-aminopropyl)-piperazin, N,N-bis(3-aminopropyl)äthylendiamin, 2-Methyl-pentandiamin (^{®}Dytek A), Oxyalkylenpolyamine wie Polyoxypropylendi- und triamine und 1,13-Diamino-4,7,10-trioxatridecan, cycloaliphatische Amine, wie Isophorondiamin (3,5,5-Trimethyl-3-aminomethylcyclohexylamin), 4,4'-Diaminodicyclohexylmethan, 3,3'-Dimethyl-4,4'-diamino-dicyclohexylmethan, N-Cyclohexyl-1 , 3-propandiamin, Diaminocyclohexane, insbesondere 1,2-Diaminocyclohexan, 1,4-Diamino-3,6-diäthylcyclohexan,1,2-Diamino-4-äthylcyclohexan,1-Cyclohexyl-3,4-diaminocyclohexan, 2,2-Bis-(4-aminocyclohexyl)-propan, 1,3- und 1,4-Bis(aminomethyl)-cyclohexan, Piperazin, N-Aminoäthylpiperazin, TCD-Diamin (3(4), 8(9)-Bis(aminomethyl)-tricyclo[5.2.1.0^{2.6}]decan), araliphatische Amine, wie Xylylendiamine (m- und p-Xylylendiamin), aromatische Amine wie Phenylendiamine, 4,4'-Oxydianilin und 4,4'-Diaminodiphenylmethan.

Zur Herstellung der erfindungsgemäßen Härtungsmittel werden im allgemeinen die Polyamine (E) gegebenenfalls in Gegenwart eines Lösungsmittels (vgl. hierzu (F)) bei 20 bis 200 °C, vorzugsweise bei 40 bis 120 °C portionsweise oder durch Zulauf innerhalb von 0,3 bis 10 Stunden, vorzugsweise innerhalb von 0,3 bis 3 Stunden mit den Epoxidverbindungen (A) und gegebenenfalls (D) und/oder den Cyclocarbonaten (B) und/oder (C) versetzt. Die Epoxidverbindungen und die Cyclocarbonate können dabei einzeln in beliebiger Reihenfolge oder als Mischungen zugegeben werden. Die Polyamine (E) können in beliebigem Überschuß zu den Epoxid- und/oder Carbonatgruppen vorliegen. Vorzugsweise werden die eingesetzten Polyamine (E) in solchen Mengen verwendet, daß die zur Reaktion befähigten Epoxidgruppen zu den am Stickstoff befindlichen Wasserstoffatomen in einem Verhältnis von 1 : 2 bis 1 : 10 und/oder die zur Reaktion befähigten Carbonatgruppen zu den am Stickstoff befindlichen Wasserstoffatomen in einem Verhältnis von 1 : 3 bis 1 : 10 stehen.

Die erfindungsgemäßen Härtungsmittel eignen sich zum Härten von polyfunktionellen Epoxidverbindungen, in bestimmter Ausführungsform auch zum Härten von wäßrigen Epoxidharzen und wäßrigen Epoxidharz-Dispersionen.

Im allgemeinen erfolgt die Aushärtung der Epoxidharze mit den erfindungsgemäßen Härtungsmitteln in Gegenwart von weiteren Zusätzen (F), die gegebenenfalls auch den Härtungsmitteln vorher zugesetzt werden können.

So ist es zum Beispiel manchmal erforderlich, Verdünnungsmittel, im allgemeinen in Mengen von 1 bis 40, vorzugsweise 5 bis 20 %, bezogen auf das Härtungsmittel, zuzugeben. Beispielsweise seien hier genannt: Organische Lösungsmittel, wie Äthylenglykol-Mono- bzw. Diäther, Propylenglykol-Monobzw. Diäther, Butylenglykol-Mono- bzw. Diäther von Monoalkoholen mit einem gegebenenfalls verzweigten Alkylrest von 1 bis 6 Kohlenstoffatomen, Tetrahydrofuran, aliphatischen Alkohole mit gegebenenfalls verzweigten Alkylresten von 1 bis 12 Kohlenstoffatomen, wie Methanol, Äthanol, Propanol, Butanol, araliphatische oder cycloaliphatische Alkohole wie Benzylalkohol oder Cyclohexanol,(cyclo)aliphatische oder aromatische Kohlenwasserstoffe, wie Hexan, Heptan, Cyclohexan, Toluol, Solvesso^{®} oder Ketone, wie Aceton, Methylisobutylketon und Cyclohexanon.

Der Siedepunkt dieser Lösungsmittel liegt bevorzugt nicht über 210 °C. Auch Gemische der verschiedenen Verdünnungsmittel sind möglich.

Hydroxylgruppenhaltige Lösungsmittel, wie Benzylalkohol, 2-Methylbenzylalkohol, 1-Phenyläthanol, 2-Phenoxyäthanol, Furfurylalkohol, Pineöl und Alkohole mit 2 bis 18 Kohlenstoffatomen, wie n-Butanol, Äthylhexylalkohol, Äthylglykol, Methylglykol, Methoxypropanol, Äthoxypropanol wirken dabei im allgemeinen beschleunigend auf die Härtungsreaktion.

Die erfindungsgemäßen Härter können noch weitere übliche Additive enthalten wie beispielsweise Beschleuniger bzw. Härtungskatalysatoren, weitere Härter und zusätzliche härtbare Harze oder Extenderharze sowie die üblichen Lackadditive wie Pigmente, Pigmentpasten, Antioxidantien, Verlauf- bzw. Verdickungsmittel (Thixotropierungsmittel), Entschäumer und/oder Netzmittel, Reaktivverdünner, Füllstoffe, flammhemmende Stoffe und dgl. genannt. Diese Additive können den härtbaren Mischungen gegebenenfalls erst unmittelbar vor der Verarbeitung zugegeben werden.

Als Beschleuniger bzw. Härtungskatalysatoren können neben den obigen hydroxylgruppenhaltigen Lösungsmitteln beispielsweise auch Phenole und Alkylphenole mit 1 - 12 C-Atomen in der Alkylgruppe wie Kresol, die verschiedenen Xylenole, Nonylphenol, Polyphenole wie Bisphenol A und F, OH-gruppenhaltige aromatische Carbonsäuren wie Salicylsäure, m-Hydroxybenzoesäure, p-Hydroxybenzoesäure sowie tert. Amine, wie Dimethylaminobenzylamin, 1,3,5-Tris(dimethylamino)phenol und dergleichen eingesetzt werden.

Als zusätzliche Härter kommen die üblichen Epoxyhärter in Frage, wie basische Härter (Aminhärter), beispielsweise Polyamine, Mannich-Basen und Addukte von Polyaminen (im Überschuß) an Polymeren, wie Polyepoxide; weiterhin phenolmodifizierte Aminhärter sowie übliche Polyamidoamine oder Polyimidazoline, die durch Kondensation von einbasigen Fettsäuren und/oder polymeren Fettsäuren, erhalten durch katalytische Polymerisation von ein- oder mehrfach ungesättigten Fettsäuren oder durch Copolymerisation von polymerisationsfähigen Verbindungen, wie z. B. Styrol, hergestellt werden. Bezüglich weiterer üblicher Härter sei beispielsweise auf die EP-OS 272 595 verwiesen.

Zusätzliche härtbare Harze sind zum Beispiel Kohlenwasserstoffharze, Phenoxyharze, Phenolharze, Polyurethanharze, Polysulfide (Thiokole), reaktive, flüssige Polymere des Butadiens bzw. entsprechende Acrylnitril/Butadien-Copolymere (Hycar-Typen), während als übliche Extenderharze hier unter anderem nicht reaktive Epoxidharz-Modifizierungsmittel, Pine oil, Teere, Phthalsäureester und Cumaronöle genannt seien.

Als Verlaufmittel können zum Beispiel Acetale, wie Polyvinylformal, Polyvinylacetal, Polyvinylbutyral, Polyvinylacetobutyral u. a. Polyäthylen- und Polypropylenglykole, Siliconharze, Gemische von Zinkseifen, von Fettsäuren und aromatischen Carbonsäuren, insbesondere handelsübliche Produkte auf Basis von Polyacrylaten eingesetzt werden. Die Verlaufmittel können auch der Komponente (A) in Mengen von 0,1 - 4 %, vorzugsweise 0,2 - 2,0 %, bezogen auf die Gesamtmasse zugesetzt werden.

Als Haftvermittler und Hydrophobierungsmittel können u. a. Silane eingesetzt werden. Diese können sowohl mit dem anorganischen Untergrund als auch mit dem organischen Polymeren (Klebstoff, Beschichtungsmasse oder dgl.) unter Ausbildung von festen Bindungen reagieren. Durch die Haftverbesserung können die mechanischen Werte, insbesondere nach Feuchtigkeitsbeanspruchung, verbessert werden. Entsprechende Produkte werden z. B. unter der Bezeichnung ^{®}Dynasylan von Hüls Aktiengesellschaft, Marl bzw. als @Silan von Degussa AG angeboten.

Die Farbstoffe und Pigmente können sowohl anorganischer als auch organischer Natur sein. Beispielsweise seien genannt Titandioxid, Zinkoxid, Ruß, Leitfähigkeitsruß wie z. B. ^{®}Printex XE 2 der Degussa AG. Die organischen Farbstoffe und Pigmente sind so auszuwählen, daß sie bei den Härtungstemperaturen stabil sind und zu keinen untolerierbaren Farbtonverschiebungen führen.

Geeignete Füllstoffe sind zum Beispiel Quarzmehl, Silikate, Kreide, Gips, Kaolin, Glimmer, Schwerspat, organische Füllstoffe wie z. B. Polyamidpulver, organische und anorganische Fasern und dergleichen. Als Thixotropier- und Verdickungsmittel können beispielsweise @Aerosil (hochdisperses Siliciumdioxid z. B. die Typen 150, 200, R 202, R 805 der Degussa), Bentonit-Typen (z. B. ^{®}Sylodex 24 von Grace, ^{®}Bentone, NL Chemicals) verwendet werden.

Die Einarbeitung der Zusätze (F) zu dem ausreagierten Härtungsmittel aus den Komponenten (A) bis (E) erfolgt im allgemeinen mit Zwangsmischern, wie z. B. Dissolvern und Knetern, Doppel-Z-Mischern und Extrudern.

Die Härtungsmittel werden vorzugsweise erst unmittelbar vor der Anwendung mit den Epoxidverbindungen, den wäßrigen Epoxidharzen oder wäßrigen Epoxidharz-Dispersionen gemischt.

Aufgrund ihrer hervorragenden anwendungstechnischen Eigenschaften eignen sich die erfindungsgemäßen Härtungsmittel in Kombination mit geeigneten Epoxidharzen und Zusatzstoffen zur Herstellung von Überzügen, Zwischenbeschichtungen, Anstrichmaterialien (z. B. als Bestandteile von Lacken), Formmassen und härtbaren Massen für die unterschiedlichsten Anwendungsgebiete.

Beispielsweise können sie zur Herstellung von Schutz- und Dekorbeschichtungen auf den verschiedensten organischen und anorganischen Substraten, wie zum Beispiel Holz, Gummi, Leder, Textilien, Kunststoffen (z. B. Polyäthylen, Polypropylen usw.), mineralischen Untergründen (z. B. Beton und Stein), Faserzement, Keramik, Glas, Kompositwerkstoffen und vorbehandelten oder nicht vorbehandelten Metallen verwendet werden.

Insbesondere eignen sich die erfindungsgemäßen Mischungen für Überzüge, Klebstoffe, Kitte, Dichtungsmassen und Formteile auf vielerlei Anwendungsgebieten, wo gute Haftung, hohe Schlag- und Stoßfestigkeit und verbesserte Flexibilität und Elastizität gefordert werden, wie z. B. auf dem Bausektor zu rißüberbrückenden Beschichtungen und Fugenausfüllungen sowie als Zusatz zu Kunststoffzementen. Der Auftrag der Mischungen kann nach den üblichen Methoden erfolgen, wie Streichen, Sprühen, Rakeln, Tauchen, Gießen, Aufwalzen, Ablegen als Kleberaupe aus geeigneten Aggregaten u. a. Die Überzüge werden dann üblicherweise bei Raumtemperatur oder gegebenenfalls bei erhöhten Temperaturen gehärtet.

In den nachfolgenden Beispielen werden die folgenden Abkürzungen und Maßeinheiten verwendet:

| Begriff | Erklärung | | Maßeinheit |
|---|---|---|---|
| molare Masse, Molmasse, veraltet "Molekulargewicht" | Masse *m* pro Stoffmenge *n* | *M* = *m* / *n* | g/mol |
| Epoxidfunktionalität | mittlere Anzahl der Epoxidgruppen pro Molekül | *v*_{E} | |
| Aminwasserstoff-Funktionalität | mittlere Anzahl der Amin-Wasserstoffatome pro Molekül | *v*_{NH} | |
| Epoxidäquivalent, EV-Wert, EV | mittlere molare Masse, dividiert durch mittlere Anzahl der Epoxidgruppen pro Molekül | *M*_{E} = *M* / *v*_{E} | g/mol |
| Epoxidzahl Aminwasserstoff-Äquivalent, HAV-Wert, HAV | Massengehalt an Epoxid-Sauerstoffatomen mittlere molare Masse, dividiert durch mittlere Anzahl der Aminwasserstoffatome pro Molekül | *m*(O)/*mM* / *v*_{NH} | g/100 g g/mol |
| Aminzahl, AZ | Masse an KOH *m*_{KOH}, die zur Neutralisation derjenigen Säuremenge erforderlich wäre, die zur Neutralisation des Amins erforderlich ist, dividiert durch die Masse der betreffenden Substanz | *AZ* = *v*_{NH} · *M*(KOH) / *M* | mg/g |

### Beispiel 1

Zu 240 g ^{®}Beckopox EP 075 (Polyoxypropylenglykoldiglycidyläther, Hoechst) mit einem Epoxidäquivalent (EV) von 340 g/mol werden in einem Vierhalskolben mit Rührer, Thermometer und Kühler unter Stickstoff 110 g 2-Aminobutan gegeben. Das Reaktionsgemisch wird auf 60 °C erwärmt und zwei Stunden bei dieser Temperatur gehalten, dann wird langsam innerhalb von zwei Stunden auf 120 °C geheizt und vier Stunden gehalten bis das Epoxidäquivalent einen Wert von 737 g/mol erreicht hat. Das Reaktionsprodukt wird sofort auf Raumtemperatur gekühlt. Die Viskosität bei 25 °C beträgt 440 mPa.s und die Aminzahl 42,9 mg/g.

### Beispiel 2

Zu 420 g des Amin-modifizierten Epoxidharzes aus Beispiel 1 werden in einem Vierhalskolben mit Rührer, Thermometer und Kühler 1,43 g Kaliumjodid gegeben und Kohlendioxid eingeleitet. Innerhalb von 15 Minuten wird auf 120 °C erwärmt und unter ständiger CO₂-Einleitung insgesamt 23 Stunden bei dieser Temperatur gehalten. Dabei geht die Epoxidzahl von 2,17 auf 0,10 g/100 g zurück. Das erhaltene Cyclocarbonat wird auf Raumtemperatur abgekühlt. Die Viskosität bei 25 °C beträgt 1890 mPa.s.

### Beispiel 3

Zu 680 g ^{®}Beckopox EP 075 (vergleiche Beispiel 1) werden in einem Vierhalskolben mit Rührer, Thermometer und Kühler unter Stickstoff 64,6 g 2-Äthylhexylamin gegeben. Das Reaktionsgemisch wird innerhalb von 40 Minuten auf 100 °C erwärmt und 75 Minuten bei dieser Temperatur gehalten und danach noch weitere 3,5 Stunden bei 120 °C belassen bis das Epoxidäquivalent einen Wert von 777 g/mol erreicht hat. Das Reaktionsprodukt wird sofort auf Raumtemperatur gekühlt. Die Viskosität bei 25 °C beträgt 415 mPa.s.

### Beispiel 4

Zu 759 g des Amin-modifizierten Epoxidharzes aus Beispiel 3 werden in einem Vierhalskolben mit Rührer, Thermometer und Kühler 2,41 g Kaliumjodid gegeben und Kohlendioxid eingeleitet. Es wird auf 120 °C geheizt und unter ständiger CO₂-Einleitung 30 Stunden bei dieser Temperatur gehalten. Dabei geht die Epoxidzahl von 2,04 auf 0,06 g/100 g zurück. Das erhaltene Cyclocarbonat wird auf Raumtemperatur abgekühlt. Die Viskosität bei 25 °C beträgt 1690 mPa.s.

### Beispiel 5

Zu 2900 g eines flüssigen Epoxidharzes auf Bisphenol A-Basis mit einem Epoxidäquivalent (EV) von 183 g/mol werden in einem Vierhalskolben mit Rührer, Thermometer und Kühler unter Stickstoff 2100 g ^{®}Jeffamine M 1000 (nach Herstellermerkblatt Polyoxyalkylenmonoamin mit Molmasse von 1000 g/mol und einem PO/EO Verhältnis von 3/19) gegeben. Dann wird auf 90 °C geheizt und solange bei dieser Temperatur gehalten (ca. 6 Stunden), bis der EV konstant bleibt. Es wird auf Raumtemperatur gekühlt. Das Epoxidharz hat folgende Kenndaten:

| | |
|---|---|
| Epoxidäquivalent | 419 g/mol |
| Aminzahl | 23,2 mg/g |
| Viskosität 25 °C | 7794 mPa.s |

### Beispiel 6

Zu 1000 g des Amin-modifizierten Epoxidharzes aus Beispiel 5 werden in einem Vierhalskolben mit Rührer, Thermometer und Kühler 5,94 g Kaliumjodid gegeben und Kohlendioxid eingeleitet. Es wird auf 120 °C geheizt und unter ständiger CO₂-Einleitung 23 Stunden bei dieser Temperatur gehalten. Dabei geht die Epoxidzahl von 3,82 auf 0,02 g/100 g zurück. Das erhaltene Cyclocarbonat wird aus dem Kolben entleert und auf Raumtemperatur gekühlt. Das Produkt ist hochviskos.

### Beispiel 7

Zu 580 g eines flüssigen Epoxidharzes auf Bisphenol A-Basis mit einem Epoxidäquivalent (EV) von 183 g/mol werden in einem Vierhalskolben mit Rührer und Thermometer und Kühler unter Stickstoff 210 g ^{®}Jeffamine M 2005 (nach Herstellermerkblatt Polyoxyalkylenmonoamin mit Molmasse 2000 g/mol und einem PO/EO Verhältnis von 32/3) gegeben. Dann wird auf 90 °C erwärmt und solange bei dieser Temperatur gehalten (ca. 2 Stunden), bis der EV konstant bei 260 stehenbleibt. Nun werden 210 g ^{®}Jeffamine M 600 (nach Herstellermerkblatt Polyoxyalkylenmonoamin mit Molmasse 600 g/mol und einem PO/EO Verhältnis von 9/1) hinzugegeben und weiter bei 90 °C gehalten (ca. 5 bis 6 Stunden) bis der EV bei ca. 440 g/mol konstant bleibt. Es wird auf Raumtemperatur gekühlt. Das Epoxidharz hat folgende Kenndaten:

| | |
|---|---|
| Epoxidäquivalent | 439 g/mol |
| Aminzahl | 26,3 mg/g |
| Viskosität 25 °C | 17350 mPa.s |

### Beispiel 8

Zu 1500 g des Amin-modifizierten Epoxidharzes aus Beispiel 7 werden in einem Vierhalskolben mit Rührer, Thermometer und Kühler 10,5 g Kaliumjodid gegeben und Kohlendioxid eingeleitet. Es wird auf 120 °C geheizt und unter ständiger CO₂-Einleitung 22 Stunden bei dieser Temperatur gehalten. Dabei geht die Epoxidzahl von 3,64 auf 0,54 g/100 g zurück. Das erhaltene Cyclocarbonat wird aus dem Kolben entleert und auf Raumtemperatur gekühlt. Das Produkt ist hochviskos.

### Beispiel 9

Zu 78 g m-Xylylendiamin (2,29 mol Amin-H) werden in einem Vierhalskolben mit Rührer, Thermometer und Kühler unter Stickstoff 422 g (0,57 mol EP-Gruppen) des Epoxidharzes aus Beispiel 1 gegeben. Dann wird auf 80 °C erwärmt und 2 Stunden bei dieser Temperatur gehalten. Das Reaktionsprodukt wird auf Raumtemperatur gekühlt. Die Viskosität bei 25 °C beträgt 15990 mPa.s, die Aminzahl 162 mg/g und der HAV 291 g/mol.

### Beispiel 10

Zu 136 g m-Xylylendiamin (4 mol Amin-H) werden in einem Vierhalskolben mit Rührer, Thermometer und Kühler unter Stickstoff 782 g des Cyclocarbonats aus Beispiel 2 gegeben. Dann wird auf 80 °C erwärmt und 2 Stunden bei dieser Temperatur gehalten. Das Reaktionsprodukt wird auf Raumtemperatur gekühlt. Die Viskosität bei 25 °C beträgt 62060 mPa.s, die Aminzahl 95 mg/g und der HAV 459 g/mol.

### Beispiel 11

75 g Äthylendiamin (5 mol Amin-H) und 925 g (1,25 mol EP-Gruppen) des Epoxidharzes aus Beispiel 1 werden analog Beispiel 9 umgesetzt. Die Viskosität bei 25 °C beträgt 11280 mPa.s, die Aminzahl 174 mg/g und der HAV 267 g/mol.

### Beispiel 12

30 g Äthylendiamin (2,13 mol Amin-H) und 391 g des Cyclocarbonats aus Beispiel 2 werden analog Beispiel 10 umgesetzt. Die Viskosität bei 25 °C beträgt 31980 mPa.s, die Aminzahl 102 mg/g und der HAV 421 g/mol.

### Beispiel 13

129 g Aminoäthylpiperazin (3 mol Amin-H) und 738 g (1 mol EP-Gruppen) des Epoxidharzes aus Beispiel 1 werden analog Beispiel 9 umgesetzt. Die Viskosität bei 25 °C beträgt 16000 mPa.s, die Aminzahl 225 mg/g und der HAV 434 g/mol.

### Beispiel 14

129 g Aminoäthylpiperazin (3 mol Amin-H) und 782 g des Cyclocarbonats aus Beispiel 2 werden analog Beispiel 10 umgesetzt. Das Reaktionsprodukt hat einen HAV von 456 g/mol.

### Beispiel 15

118 g m-Xylylendiamin (3,47 mol Amin-H) und 670 g (0,86 mol EP-Gruppen) des Epoxidharzes aus Beispiel 3 werden analog Beispiel 9 umgesetzt. Die Viskosität bei 25 °C beträgt 12920 mPa.s, die Aminzahl 159 mg/g und der HAV 302 g/mol.

### Beispiel 16

49 g m-Xylylendiamin (1,44 mol Amin-H) und 290 g des Cyclocarbonats aus Beispiel 4 werden analog Beispiel 10 umgesetzt. Das Reaktionsprodukt hat einen HAV von 469 g/mol.

### Beispiel 17

136 g m-Xylylendiamin (4 mol Amin-H) und 463 g des Cyclocarbonats aus Beispiel 5 werden analog Beispiel 10, aber bei 90 °C, umgesetzt. Das Reaktionsprodukt hat einen HAV von 300 g/mol.

### Beispiel 18

136 g m-Xylylendiamin (4 mol Amin-H) und 483 g des Cyclocarbonats aus Beispiel 6 werden analog Beispiel 10, aber bei 90 °C, umgesetzt. Das Reaktionsprodukt hat einen HAV von 310 g/mol.

Aus den erfindungsgemäßen Epoxid- bzw. Carbonat-Amin-Addukten der Beispiele 9 bis 18 werden die Härter Beispiele 19 bis 28 formuliert (siehe Tabelle 1). Dabei sind die jeweiligen Epoxid-Amin- und Carbonat-Amin-Addukte auf annähernd gleichen HAV und soweit möglich auf ungefähr gleichen Viskositätsbereich eingestellt.

Die Härter (Beispiele 19 bis 28) werden durch homogenes Verrühren der Einzelkomponenten erhalten.

### Beispiel 29

599 g des Carbonat-Amin-Adduktes aus Beispiel 17 werden mit 75 g m-Xylylendiamin und 168 g Wasser bei 50 °C homogen verrührt. Der wäßrige Härter hat eine Viskosität von 18440 mPa.s, eine Aminzahl von 155 mg/g und einen HAV von 200 g/mol (gemessen an 80%iger Lösung).

### Beispiel 30

Aus dem Härter nach Beispiel 29 und der 56%igen wäßrigen Epoxidfestharz-Dispersion ^{®}Beckopox VEP 2385 w (Hoechst AG) mit einem Epoxid-Äquivalentgewicht von ca. 500 g/mol bezogen auf Festharz wird ein (70 ± 10) µm Trockenfilm auf Glas angefertigt und geprüft.

| **Ergebnis:** | | | |
|---|---|---|---|
| VEP 2385 w (56%ig) | | GT | 100 |
| Härter nach Beispiel 29 | | GT | 22 |
| E-Wasser | | GT | 22 |
| Verarbeitungszeit | | h | 2,75 |
| Trocknung staubtrocken in (nach DIN 53 150) | | h | 0,50 |
| Oberflächenkleber nach 24 h (Beurteilung nach DIN 53 230) | | | 0 |

| Pendelhärte DIN 53 157 | | | |
|---|---|---|---|
| nach | 24 h | s | 80 |
| | 48 h | s | 90 |
| | 7 Tagen | s | 153 |

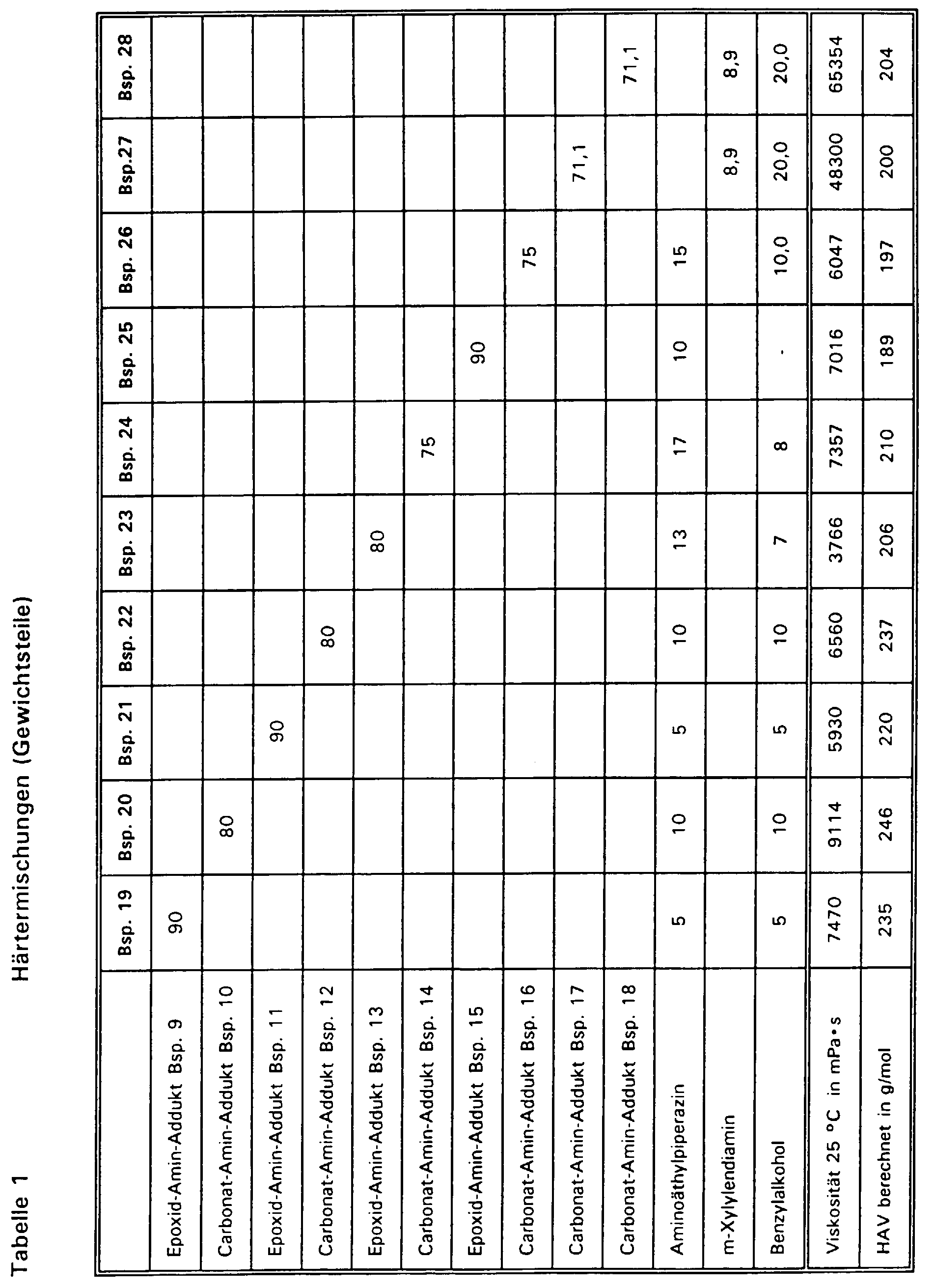

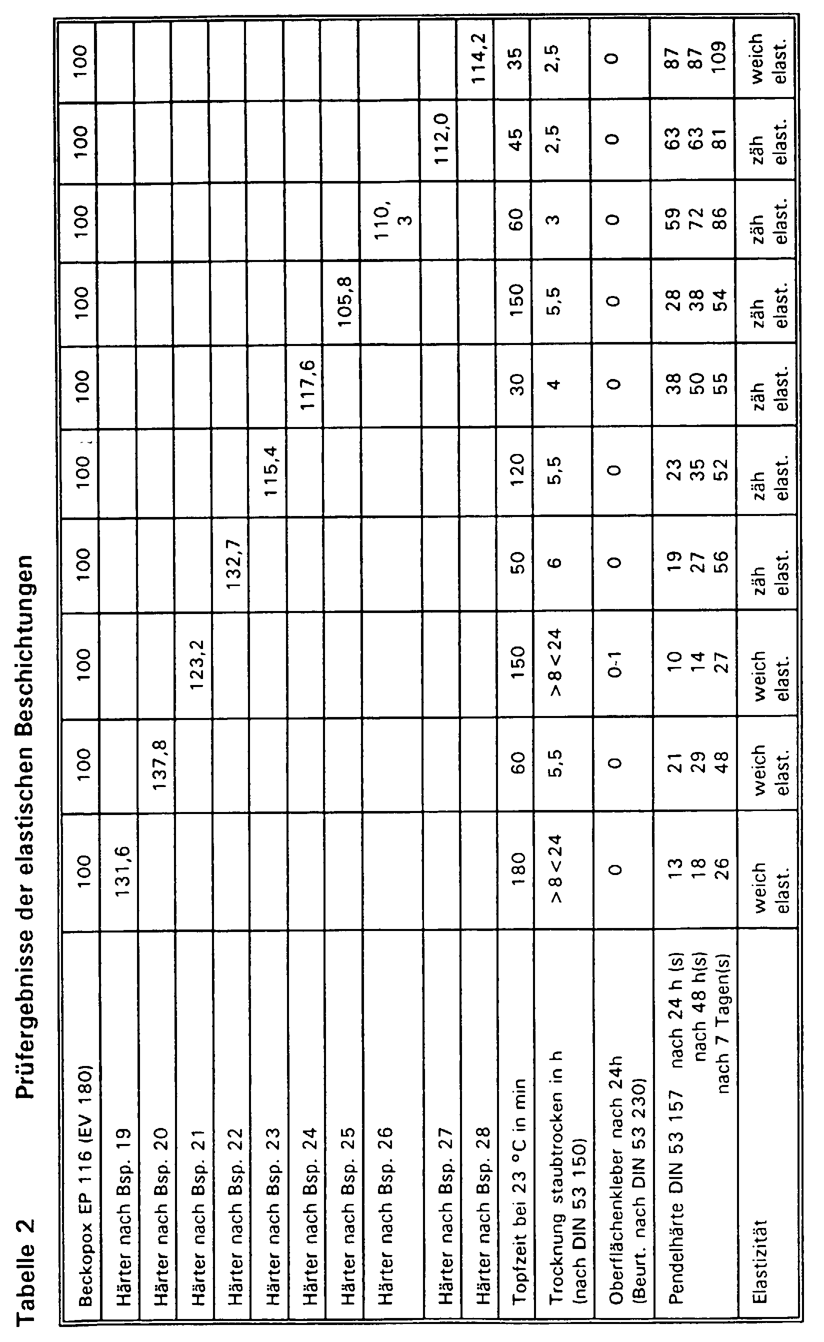

## Patentansprüche

1. Härtungsmittel für Epoxidharze bestehend aus Umsetzungsprodukten von
(A) Verbindungen, die mindestens zwei 1,2-Epoxidgruppen enthalten, die Umsetzungsprodukte sind aus
(A1) Verbindungen mit mindestens zwei 1,2-Epoxidgruppen pro Molekül
(A2) gegebenenfalls in Abmischung mit Mono-Epoxiden und
(A3) einem oder mehreren Aminen ausgewählt aus (A 31) Aminen der Formel I 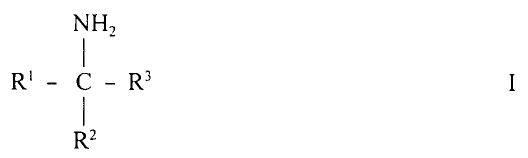 in der bedeuten
R¹ verzweigter oder unverzweigter aliphatischer, cycloaliphatischer, araliphatischer oder aromatischer, gegebenenfalls durch Hydroxy-, Alkoxy- oder Halogen-Gruppen substituierter Kohlenwasserstoffrest mit 1 bis 30 Kohlenstoffatomen,
R² und R³ jeweils unabhängig voneinander Wasserstoff oder R¹
und für den Fall, daß R² und R³ Wasserstoff sind, der verbleibende Rest R¹ einer der folgenden Substituenten ist 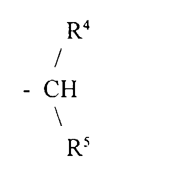 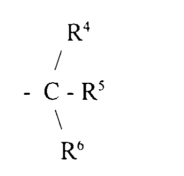 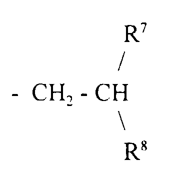 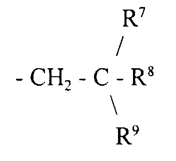 wo die Reste
R⁴ bis R⁹ jeweils unabhängig voneinander die Bedeutung verzweigter oder unverzweigter aliphatischer, cycloaliphatischer, araliphatischer oder aromatischer, gegebenenfalls durch Hydroxy-, Alkoxy- oder Halogen-Gruppen substituierter Kohlenwasserstoffrest mit 1 bis 30 Kohlenstoffatomen haben, und
(A32) Aminen der Formel II 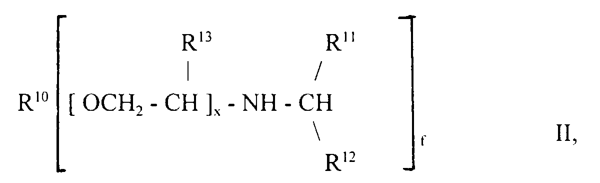 worin
R¹⁰ 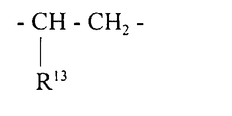 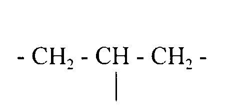 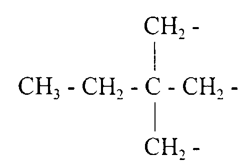 oder 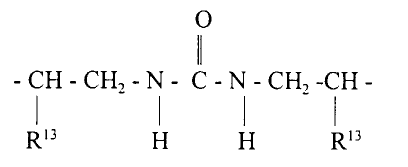 bedeutet,
R¹¹ und R¹² jeweils unabhängig voneinander Wasserstoff, ein gesättigtes oder ungesättigtes geradkettiges, verzweigtes oder cyclisches (gegebenenfalls mit Heteroatomen im Ring) Alkyl mit bis zu 15 Kohlenstoffatomen, oder zusammen einen cyclischen Alkylenrest mit bis zu 8 Kohlenstoffatomen, der gegebenenfalls mit Alkylgruppen mit 1 bis 3 Kohlenstoffatomen ein-, zwei- oder dreifach substituiert ist,
R¹³ Wasserstoff oder Methyl,
x eine ganze Zahl von 1 bis 100, und
f 2 oder 3 bedeuten.
(A 33) Aminen der Formel III 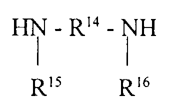 in der bedeuten
R¹⁴ ein Alkylen-, Cycloalkylen oder Aralkylenrest, der gegebenenfalls durch Hydroxy-, Äther- oder Halogengruppen substituiert ist,
R¹⁵ und R¹⁶ Alkyl-, unabhängig voneinander ein Cycloalkyl oder Aralkylrest, der gegebenenfalls durch Hydroxy-, Äther- oder Halogen-Gruppen substituiert ist, wobei beide Reste, gegebenenfalls auch durch Heteroatome, verbunden sein können, mit der Maßgabe, daß mindestens einer der Substituenten R¹⁴, R¹⁵ oder R¹⁶ in α- und/oder β-Stellung zu jedem N-Atom eine Verzweigung aufweist, d. h. mindestens eine Methylgruppe trägt und/oder daß der Stickstoff als Ringatom gebunden ist, und/oder
(B) Cyclocarbonaten, die Umsetzungsprodukte sind aus den Verbindungen (A) und (B1) Kohlendioxid und/oder
(C) Cyclocarbonaten, die Umsetzungsprodukte sind aus
(C1) Verbindungen mit mindestens zwei 1,2-Epoxidgruppen pro Molekül, erhalten aus
(C11) Verbindungen mit mindestens zwei 1,2-Epoxidgruppen pro Molekül
(C12) gegebenenfalls Monoepoxide und
(C13) Polyoxyalkylenaminen und
(C2) Kohlendioxid
und
(D) gegebenenfalls 1 ,2-Epoxidverbindungen, die nicht gleich (A 1), (A2), (C11), (C12) sind und/oder nicht umgesetzte Anteile der Verbindungen (A1), (A2), (C11) und (C12) aus der Herstellung der Verbindungen (A) und (C1)
und
(E) Polyaminen ausgewählt aus Polyalkylenpolyaminen, Diäthylentriamin und Triäthylentetramin, Tetraäthylenpentamin, Pentaäthylenhexamin, 2,2,4- und 2,4,4-Trimethylhexamethylendiamin, Bis-(3-aminopropyl)-methylamin, 1,4-Bis(3-aminopropyl)-piperazin, N,N-bis(3-aminopropyl)äthylendiamin, 2-Methyl-pentandiamin, Polyoxypropylendiund triaminen und 1,13-Diamino-4,7,10-trioxatridecan, Isophorondiamin (3,5,5-Trimethyl-3-aminomethylcyclohexylamin), 4,4'-Diaminodicyclohexylmethan, 3,3'-Dimethyl-4,4'-diaminodicyclohexylmethan, N-Cyclohexyl-1,3-propandiamin, 1,2-Diaminocyclohexan, 1,4-Diamino-3,6-diäthylcyclohexan, 1,2-Diamino-4-äthylcyclohexan, 1-Cyclohexyl-3,4-diaminocyclohexan, 2,2-Bis-(4-aminocyclohexyl)-propan, 1,3- und 1,4-Bis(aminomethyl)-cyclohexan, Piperazin, N-Aminoäthylpiperazin, TCD-Diamin (3(4), 8(9)-Bis(aminomethyl)-tricyclo[5.2.1.0^{2,6}]decan), mund p-Xylylendiamin, Phenylendiamine, 4,4'-Oxydianilin und 4,4'-Diaminodiphenylmethan, und
(F) gegebenenfalls weiteren Zusätzen.

2. Zusammensetzung nach Anspruch 1, dadurch gekennzeichnet, daß die Verbindungen (A1), (C11) und gegebenenfalls (D) Epoxidäquivalentgewichte von 100 bis 500 g/mol aufweisen.

3. Zusammensetzung nach Anspruch 2, dadurch gekennzeichnet, daß die Verbindungen (A1), (C11) und gegebenenfalls (D) ausgewählt sind aus der Gruppe der Diglycidyläther von Bisphenol-A und Bisphenol-F.

4. Zusammensetzung nach Anspruch 1, dadurch gekennzeichnet, daß die Verbindungen (A1) ausgewählt sind aus der Gruppe der Polyoxyalkylenglykoldiglycidyläther sind.

5. Zusammensetzung nach Anspruch 4, dadurch gekennzeichnet, daß die Verbindungen (A1) Polypropylenglykoldiglycidyläther sind.

6. Zusammensetzung nach Anspruch 1, dadurch gekennzeichnet, daß die Amine (A31) t-Alkylamine mit 4 bis 22 Kohlenstoffatomen sind.

7. Zusammensetzung nach Anspruch 1, dadurch gekennzeichnet, daß die Amine (A31) die Formel (IV) 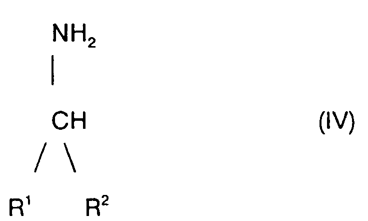 aufweisen, in der R¹ und R² die Bedeutung von R¹ in Anspruch 1 haben.

8. Zusammensetzung nach Anspruch 7, dadurch gekennzeichnet, daß als Amin (A31) 2-Aminobutan eingesetzt wird.

9. Härtungsmittel nach Anspruch 7, dadurch gekennzeichnet, daß als Amin (A31) 2-Äthylhexylamin eingesetzt wird.

10. Härtungsmittel nach Anspruch 1, dadurch gekennzeichnet, daß als Amin (A33) Amine der Formel III eingesetzt werden, in der bedeuten die Reste R¹⁵ und R¹⁶ 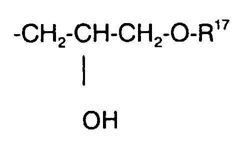 wobei R¹⁷ ein gegebenenfalls durch Hydroxy-, Äther- oder Halogengruppen substituierter Alkyl-, Cycloalkyl-, Aralkyl- oder Arylrest ist.

11. Härtungsmittel nach Anspruch 1, dadurch gekennzeichnet, daß die Verbindungen (A) Umsetzungsprodukte aus Polyoxypropylenglycoldiglycidyläthern (A1) und 2-Aminobutan oder 2-Äthylhexylamin (A3) sind.

12. Härtungsmittel nach Anspruch 1, dadurch gekennzeichnet, daß die Verbindungen (B) Umsetzungsprodukte aus Polyoxypropylenglycoldiglycidyläthern (A1) und 2-Aminobutan oder 2-Äthylhexylamin (A3) und Kohlendioxid (B1) sind.

13. Härtungsmittel nach Anspruch 1, dadurch gekennzeichnet, daß als Polyoxyalkylenamine (C13) Polyoxyalkylenmonoamine eingesetzt werden.

14. Härtungsmittel nach Anspruch 1, dadurch gekennzeichnet, daß die Verbindungen (C) Umsetzungsprodukte aus Verbindungen (C11), ausgewählt aus der Gruppe der Diglycidyläther von Bisphenol-A und Bisphenol-F, Polyoxyalkylenmonoaminen (C13) mit Molmassen von 130 bis 5000 g/mol und Kohlendioxid (C2) sind.

15. Härtungsmittel nach den Ansprüchen 12 und 14, dadurch gekennzeichnet, daß 10 bis 95 % der Epoxidgruppen in Cyclocarbonatgruppen überführt sind.

16. Härtungsmittel nach Anspruch 1, dadurch gekennzeichnet, daß als Amine (E) Äthylendiamin, 2-Methylpentandiamin, Trimethylhexamethylendiamin, 2-Aminoäthylpiperazin oder m-Xylylendiamin eingesetzt werden.

17. Verwendung des Härtungsmittels in Kombination mit Epoxidverbindungen als Klebstoff und Beschichtungsmasse, insbesondere für rißüberbrückende Beschichtungen.

18. Wäßrige Epoxidharze oder Epoxidharz-Dispersionen enthaltend ein Härtungsmittel nach Anspruch 1.

## Claims

1. A hardener composition for epoxy resins, comprising reaction products of
(A) compounds containing at least two 1,2-epoxide groups, which are reaction products of
(A1) compounds having at least two 1,2-epoxide groups per molecule
(A2) alone or mixed with mono-epoxides and
(A3) one or more amines selected from (A 31) amines of the formula I 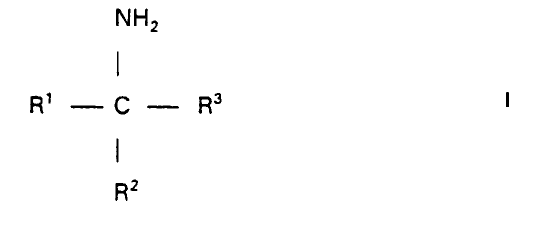 in which
R¹ is a branched or unbranched aliphatic, cycloaliphatic, araliphatic or aromatic hydrocarbon radical having 1 to 30 carbon atoms which is unsubstituted or substituted by hydroxyl, alkoxy or halogen groups,
R² and R³ independently of one another are each hydrogen or R¹
and, if R² and R³ are hydrogen, the remaining radical R¹ is one of the following substituents 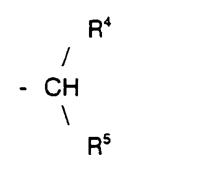 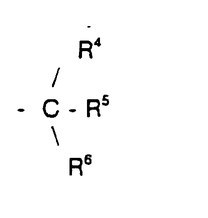 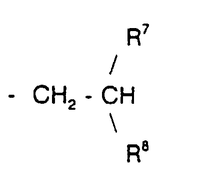 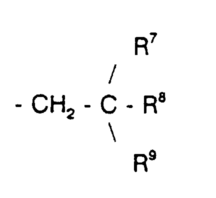
in which the radicals
R⁴ to R⁹ independently of one another are each a branched or unbranched aliphatic, cycloaliphatic, araliphatic or aromatic hydrocarbon radical having 1 to 30 carbon atoms which is unsubstituted or substituted by hydroxyl, alkoxy or halogen groups, and
(A32) amines of the formula II 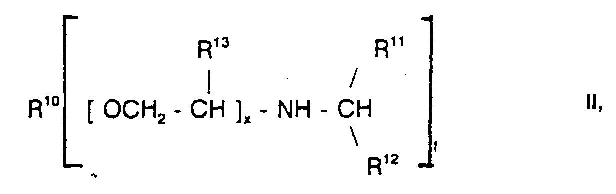 in which
R¹⁰ is 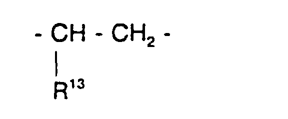 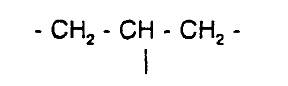 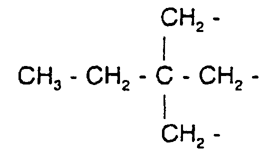 or 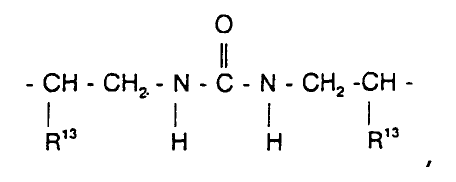
R¹¹ and R¹² independently of one another are each hydrogen, a saturated or unsaturated straight-chain, branched or cyclic (with or without heteroatoms in the ring) alkyl having up to 15 carbon atoms, or together are a cyclic alkylene radical having up to 8 carbon atoms which is unsubstituted or substituted once, twice or three times by alkyl groups having 1 to 3 carbon atoms,
R¹³ is hydrogen or methyl,
x is an integer from 1 to 100, and
f is 2 or 3,
(A 33) amines of the formula III 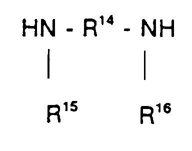 in which
R¹⁴ is an alkylene, cycloalkylene or aralkylene radical which is unsubstituted or substituted by hydroxyl, ether or halogen groups,
R¹⁵ and R¹⁶ are alkyl or, independently of one another, are a cycloalkyl or aralkyl radical which is unsubstituted or substituted by hydroxyl, ether or halogen groups, it being possible for both radicals to be connected, possibly via heteroatoms, with the proviso that at least one of the substituents R¹⁴, R¹⁵ or R¹⁶ in α- and/or β-position to each nitrogen atom has a branch, i.e. carries at least one methyl group, and/or that the nitrogen is attached as a ring atom, and/or
(B) cyclocarbonates which are reaction products of the compounds (A) and (B1) carbon dioxide, and/or
(C) cyclocarbonates which are reaction products of
(C1) compounds having at least two 1,2-epoxide groups per molecule, obtained from
(C11) compounds having at least two 1,2-epoxide groups per molecule
(C12) with or without monoepoxides and
(C13) polyoxyalkyleneamines, and
(C2) carbon dioxide,
and
(D) if desired, 1,2-epoxide compounds which are not identical to (A1), (A2), (C11), (C12) and/or unreacted portions of compounds (A1), (A2), (C11) and (C12) from the preparation of the compounds (A) and (C1),
and
(E) polyamines selected from polyalkylene polyamines, diethylenetriamine and triethylenetetramine, tetraethylenepentamine, pentaethylenehexamine, 2,2,4- and 2,4,4-trimethylhexamethylenediamine, bis(3-aminopropyl)-methylamine, 1,4-bis (3-aminopropyl) piperazine, N,N-bis(3-aminopropyl)ethylenediamine, 2-methylpentanediamine, polyoxypropylenedi- and triamines and 1,13-diamino-4,7,10-trioxatridecane, isophoronediamine (3,5,5- trimethyl-3-aminomethylcyclohexylamine), 4,4'-diaminodicyclohexylmethane, 3,3'-dimethyl-4,4'-diaminodicyclohexylmethane, N-cyclohexyl-1,3-propanediamine, 1,2-diaminocyclohexane, 1,4-diamino-3,6-diethylcyclohexane, 1,2-diamino-4-ethylcyclohexane, 1-cyclohexyl-3,4-diaminocyclohexane, 2,2-bis(4-aminocyclohexyl) propane, 1,3- and 1,4-bis(aminomethyl)-cyclohexane, piperazine, N-aminoethylpiperazine, TCD diamine (3(4),8(9)-bis-(aminomethyl) tricyclo [5.2.1.0^{2,6}]decane), m- and p-xylylenediamine, phenylenediamine, 4,4'-oxydianiline and 4,4'-diaminodiphenylmethane, and
(F) if desired, further additives.

2. A composition as claimed in claim 1, wherein the compounds (A1), (C11) and, if appropriate, (D) have epoxide equivalent weights of from 100 to 500 g/mol.

3. A composition as claimed in claim 2, wherein the compounds (A1), (C11) and, if appropriate, (D) are selected from the group consisting of the diglycidyl ethers of bisphenol A and bisphenol F.

4. A composition as claimed in claim 1, wherein the compounds (A1) are selected from the group consisting of polyoxyalkylene glycol diglycidyl ethers.

5. A composition as claimed in claim 4, wherein the compounds (A1) are polypropylene glycol diglycidyl ethers.

6. A composition as claimed in claim 1, wherein the amines (A31) are tert-alkylamines having 4 to 22 carbon atoms.

7. A composition as claimed in claim 1, wherein the amines (A31) have the formula (IV) 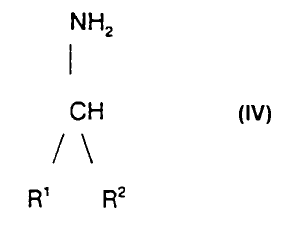 in which R¹ and R² have the meaning of R¹ in claim 1.

8. A composition as claimed in claim 7, wherein 2-aminobutane is employed as amine (A31).

9. A hardener composition as claimed in claim 7, wherein 2-ethylhexylamine is employed as amine (A31).

10. A hardener composition as claimed in claim 1, wherein the amine (A33) employed comprises amines of the formula III in which the radicals R¹⁵ and R¹⁶ are 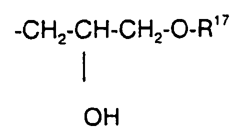 in which R¹⁷ is an alkyl, cycloalkyl, aralkyl or aryl radical which is unsubstituted or substituted by hydroxyl, ether or halogen groups.

11. A hardener composition as claimed in claim 1, wherein the compounds (A) are reaction products of polyoxypropylene glycol diglycidyl ethers (A1) and 2-aminobutane or 2-ethylhexylamine (A3).

12. A hardener composition as claimed in claim 1, wherein the compounds (B) are reaction products of polyoxypropylene glycol diglycidyl ethers (A1) and 2-aminobutane or 2-ethylhexylamine (A3) and carbon dioxide (B1).

13. A hardener composition as claimed in claim 1, wherein polyoxyalkylenemonoamines are employed as polyoxyalkyleneamines (C13).

14. A hardener composition as claimed in claim 1, wherein the compounds (C) are reaction products of compounds (C11), selected from the group consisting of the diglycidyl ethers of bisphenol A and bisphenol F, polyoxyalkylenemonoamines (C13) with molecular masses of from 130 to 5000 g/mol, and carbon dioxide (C2).

15. A hardener composition as claimed in either of claims 12 and 14, wherein from 10 to 95 % of the epoxide groups are converted into cyclocarbonate groups.

16. A hardener composition as claimed in claim 1, wherein amines (E) employed are ethylenediamine, 2-methylpentanediamine, trimethylhexamethylenediamine, 2-aminoethylpiperazine or m-xylylenediamine.

17. The use of the hardener composition in combination with epoxide compounds as adhesive and coating composition, expecially for crack-bridging coatings.

18. An aqueous epoxy resin or epoxy resin dispersion comprising a hardener composition as claimed in claim 1.

## Revendications

1. Durcisseur de résines époxydes constitué par des produits de réaction
(A) de composés contenant au moins deux groupes 1,2-époxyde, lesquels sont des produits de réaction
(A1) de composés contenant au moins deux groupes 1,2-époxyde dans la molécule,
(A2) éventuellement en mélange avec des monoépoxydes et
(A3) d'une ou plusieurs amines prises parmi
(A31) des amines de formule I 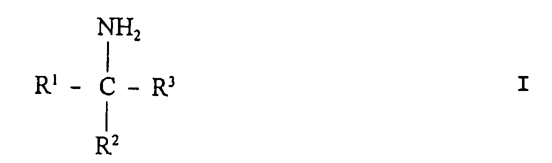 dans laquelle
R¹ représente un reste hydrocarboné aliphatique, cycloaliphatique, araliphatique ou aromatique, comportant 1 à 30 atomes de carbone, ramifié ou non ramifié, éventuellement substitué par des groupes hydroxy, alkoxy ou halogène,
R² et R³ représente chacun, indépendamment l'un de l'autre, des atomes d'hydrogène ou R¹, et pour le cas où R² et R³ représentent un atome d'hydrogène, le reste restant R¹ représente un des substituants suivants 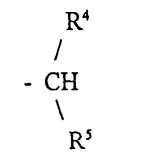 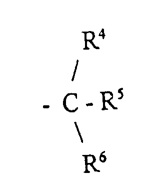 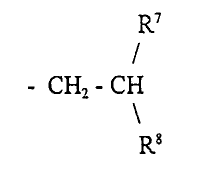 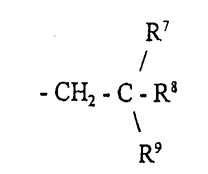
où les restes
R⁴ à R⁹ présente chacun, indépendamment les uns des autres, des restes hydrocarbonés aliphatiques, cycloaliphatiques, araliphatiques ou aromatiques, comportant 1 à 30 atomes de carbone, ramifiés ou non ramifiés, éventuellement substitués par des groupes hydroxy, alkoxy ou halogène, et
(A32) des amines de formule II 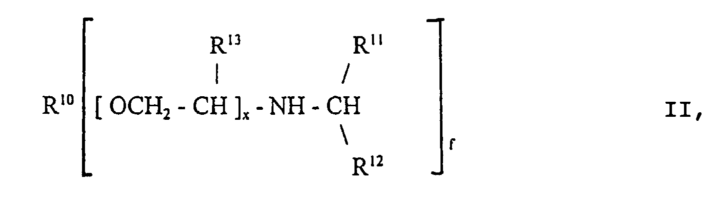 où
R¹⁰ représente 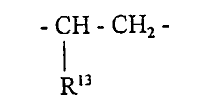 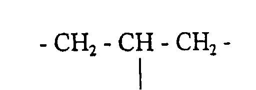 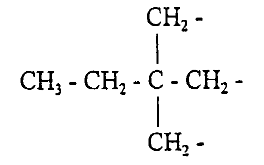 ou 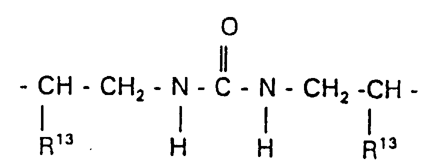
R¹¹ et R¹² représente chacun, indépendamment l'un de l'autre, des atomes d'hydrogène, un groupe alkyle comportant jusqu'à 15 atomes de carbone, saturé ou insaturé, à chaîne droite, ramifiée ou cyclique (éventuellement comportant des hétéroatomes dans le cycle), ou ensemble représentent un reste alkylène cyclique comportant jusqu'à 8 atomes de carbone, lequel est éventuellement substitué une, deux ou trois fois par des groupes alkyle comportant 1 à 3 atomes de carbone,
R¹³ représente un atome d'hydrogène ou un groupe méthyle,
x est un entier de 1 à 100, et
f vaut 2 ou 3,
(A33) des amines de formule III 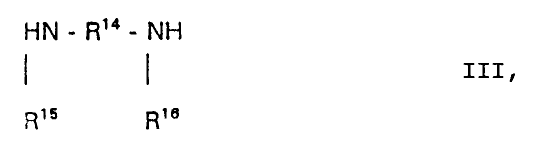 dans laquelle
R¹⁴ représente un reste alkylène, cycloalkylène ou aralkylène, lequel est éventuellement substitué par des groupes hydroxy, éther ou halogène,
R¹⁵ et R¹⁶ représentent un reste alkyle, indépendamment l'un de l'autre un reste cycloalkyle ou aralkyle, lequel est éventuellement substitué par des groupes hydroxy, éther ou halogène, les deux restes pouvant éventuellement être reliés aussi par des hétéroatomes, à condition qu'au moins un des substituants R¹⁴, R¹⁵ ou R¹⁶ présente une ramification en position α et/ou β par rapport à chaque atome de N, c'est-à-dire, qu'il porte au moins un groupe méthyle et/ou que l'atome d'azote soit lié comme atome de cycle, et/ou
(B) de cyclocarbonates, lesquels sont des produits de réaction des composés (A) et (B1) du dioxyde de carbone et/ou
(C) de cyclocarbonates, lesquels sont des produits de réaction
(C1) de composés comportant au moins deux groupes 1,2-époxyde par molécule
(C11) de composés comportant au moins deux groupes 1,2-époxy par molécule,
(C21) éventuellement de monoépoxydes et
(C13) de polyoxyalkylène amines et
(C2) de dioxyde de carbone
et
(D) éventuellement de composés 1,2-époxyde, lesquels ne sont pas identiques à (A1), (A2), (C11), (C12) et/ou sont des taux n'ayant pas réagi des composés (A1), (A2), (C11) et (C12) provenant de la préparation des composés (A) et (C1)
et
(E) de polyamines prises parmi les polyalkylène polyamines, la diéthylène triamine et la triéthylène tétramine, la tétraéthylène pentamine, la pentaéthylène hexamine, la 2,2,4- et/ou 2,4,4-triméthylhexaméthylène diamine, la bis(3-aminopropyl)méthylamine, la 1,4-bis(3-aminopropyl)-pipérazine, la N,N-bis(3-aminopropyl)éthylène diamine, la 2-méthylpentane diamine, des les polyoxypropylène di- et -triamines et le 1,13-diamino-4,7,10-trioxatridécane, l'isophorone diamine, la (3,5,5-triméthyl-3-aminométhylcyclohexylamine), le 4,4'-diaminodicyclohexylméthane, le 3,3'-diméthyl-4,4'-diaminodicyclohexylméthane, la N-cyclohexyl-1,3-propane diamine, le 1,2-diaminocyclohexane, le 1,4-diamino-3,6-diéthylcyclohexane, le 1,2-diamino-4-éthylcyclohexane, le 1-cyclohexyl-3,4-diaminocyclohexane, le 2,2-bis-(4-aminocyclohexyl)propane, le 1,3- et le 1,4-bis(aminométhyl)-cyclohexane, la pipérazine, la N-aminoéthylpipérazine, la TCD-diamine (3(4), 8(9)-bis(aminométhyl)-tricyclo[5.2.1.0^{2,6}]décane, la m- et la p-xylylène diamine, la phénylène diamine, la 4,4'-oxydianiline et le 4,4'-diaminodiphénylméthane ; et
(F) éventuellement d'autres additifs.

2. Composition selon la revendication 1, caractérisée en ce que les composés (A1), (C11) et éventuellement (D) présentent des poids équivalents d'époxyde de 100 à 500 g/mole.

3. Composition selon la revendication 2, caractérisée en ce que les composés (A1), (C11) et éventuellement (D) sont pris dans le groupe des éthers diglycidyliques du bisphénol A et du bisphénol F.

4. Composition selon la revendication 1, caractérisée en ce que les composés (A1) sont pris dans le groupe des éthers diglycidyliques de polyoxyalkylène glycol.

5. Composition selon la revendication 4, caractérisée en ce que les composés (A1) sont des éthers diglycidyliques du polypropylène glycol.

6. Composition selon la revendication 1, caractérisée en ce que les amines (A31) sont des t-alkylamines avec 4 à 22 atomes de carbone.

7. Composition selon la revendication 1, caractérisée en ce que les amines (A31) répondent à la formule IV 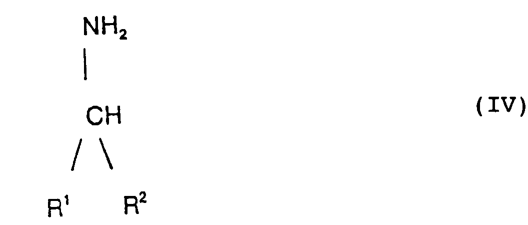 dans laquelle R¹ et R² possèdent la signification de R¹ donnée à la revendication 1.

8. Composition selon la revendication 7, caractérisée en ce que l'on emploie, en tant qu'amine (A31), le 2-aminobutane.

9. Composition selon la revendication 7, caractérisée en ce que l'on emploie, en tant qu'amine (A31), la 2-éthylhexylamine.

10. Durcisseur selon la revendication 1, caractérisé en ce que l'on emploie, en tant qu'amine (A33), des amines de formule III, dans laquelle les restes R¹⁵ et R¹⁶ représentent 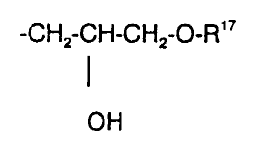 R¹⁷ étant un reste alkyle, cycloalkyle, aralkyle ou aryle éventuellement substitué par des groupes hydroxy, éther ou halogène.

11. Durcisseur selon la revendication 1, caractérisé en ce que les composés (A) sont des produits de réaction des éthers diglycidyliques de polyoxypropylène glycol (A1) et du 2-aminobutane ou de la 2-éthylhexylamine (A3).

12. Durcisseur selon la revendication 1, caractérisé en ce que les composés (B) sont des produits de réaction des éthers diglycidyliques de polyoxypropylène glycol (A1) et du 2-aminobutane ou de la 2-éthylhexylamine (A3) et du dioxyde de carbone (B1).

13. Durcisseur selon la revendication 1, caractérisé en ce que l'on emploie en tant que polyoxyalkylène amines (C13) des polyoxyalkylène monoamines.

14. Durcisseur selon la revendication 1, caractérisé en ce que les composés (C) sont des produits de réaction des composés (C11), pris dans le groupe des éthers diglycidyliques du bisphénol-A et du bisphénol-F, des polyoxyalkylène monoamines (C13) ayant des masses molaires de 130 à 5000 g/mole et du dioxyde de carbone (C2).

15. Durcisseur selon les revendications 12 et 14, caractérisé en ce que 10 à 95% des groupes époxyde sont transformés en groupes cyclocarbonate.

16. Durcisseur selon la revendication 1, caractérisé en ce que les amines (E) sont l'éthylène diamine, la 2-méthylpentane diamine, la triméthylhexaméthylène diamine, la 2-aminoéthylpipérazine ou la m-xylylène diamine.

17. Utilisation de l'agent durcisseur en combinaison avec des composés d'époxydes comme adhésif et matière de revêtement, notamment dans les revêtements pour soudure de fissures.

18. Résines époxydes aqueuses ou dispersions de résines époxydes aqueuses contenant un durcisseur selon la revendication 1.
